# EUROPÄISCHE PATENTSCHRIFT

(11) **EP 0 482 154 B1**
(45) Veröffentlichungstag und Bekanntmachung des Hinweises auf die Patenterteilung: **30.06.1993**
(21) Anmeldenummer: 91908542.3
(22) Anmeldetag: 16.05.1991
(51) Int. Cl.: H04L 9/06

(54) **VORRICHTUNG FÜR DAS UMWANDELN EINES DIGITALBLOCKES UND VERWENDUNG DERSELBEN**
DEVICE FOR CONVERTING A DIGITAL BLOCK AND THE USE THEREOF
DISPOSITIF DE CONVERSION DE BLOCS NUMERIQUES ET SON UTILISATION

(30) Priorität: 18.05.1990 CH 1690/90
(43) Veröffentlichungstag der Anmeldung: 29.04.1992
(73) Patentinhaber: ASCOM TECH AG, CH-3018 Bern (CH)
(72) Erfinder: MASSEY, James, Lee, CH-8037 Zürich (CH); LAI, Xuejia, CH-8303 Kloten (CH)
(74) Vertreter: Schwerdtel, Eberhard, Dr.
(86) Internationale Anmeldenummer: CH9100117
(87) Internationale Veröffentlichungsnummer: WO9118459

(56) Entgegenhaltungen:
- EP-A- 0 221 538
- US-A- 4 255 811

## Beschreibung

Die Erfindung betrifft eine Vorrichtung für das blockweise Umwandeln eines ersten Digitalblockes in einen zweiten Digitalblock entsprechend dem Oberbegriff von Anspruch 1. Die Erfindung betrifft weiter die Verwendung dieser Vorrichtung entsprechend dem Oberbegriff des anderen unabhängigen Anspruchs.

Seit mehr als zehn Jahren stehen weltweit Übertragungsnetze im Einsatz, die den Data Encryption Standard DES verwenden. Dieser Standard DES des American National Bureau of Standards (NBS) dient zur Blockverschlüsselung mit individuell wählbaren Schlüsseln (secret-key block encryption). Hierbei hat jeder Klartextblock (plaintext block) eine Länge von 64 Bit, desgleichen der Chiffriertextblock. Als Schlüssel (secret-key) dient eine Sequenz von 64 Bit, von denen 56 Bit frei wählbar sind. Die Übertragung der Chiffriertextblöcke erfolgt über ein allgemein zugängliches Netz.

Der Data Encryption Standard DES gilt allgemein als sehr gutes Verschlüsselungs-Werkzeug. Es ist jedoch eine offene, diskutierte Frage, ob der Standard DES inzwischen unsicher geworden ist oder nicht. Hierbei spielt die relativ geringe Länge des Geheimsschlüssels eine wichtige Rolle.

Aus der Schrift EP-A-0 221 538 ist eine weitere Blockverschlüsselungsmethode bekannt. Hierbei werden in mehreren parallelen Verarbeitungskanälen die den verschiedenen Kanälen eingangsseitig zugeführten Daten in direkter und indirekter Weise mit den Daten jeweils aller anderen Kanäle funktional gemischt. Die hierbei schliesslich entstehenden neuen Kanaldaten werden ausgangsseitig gemischt und gemeinsam ausgegeben. Die bei dieser Methode verwendeten Funktionsoperatoren sind alle gleich und werden beliebig untereinander und mit ebenfalls einheitlichen Transformationsoperatoren kombiniert.

Aus der Schrift US-A-4 255 811 ist schliesslich eine Blockverschlüsselungsmethode für ein abgegrenztes Computersystem bekannt, bei der für alle autorisierten Teilnehmer ein einheitlicher Schlüssel bereitgestellt ist. Ein zentraler Rechner besitzt eine Liste aller ausgegebenen autorisierten Teilnehmerschlüssel. Die Verschlüsselung nimmt jeder Teilnehmer mit Hilfe des ihm zugeteilten Teilnehmerschlüssels vor, die Entschlüsselung mit Hilfe eines jeweiligen Schlüssels, der auf Anfrage vom zentralen Rechner zu erhalten ist.

Es ist die Aufgabe der Erfindung, eine gegenüber den bekannten Methoden verbesserte Blockverschlüsselungsart anzugeben, die als europäischer Standard einführbar wäre. Diese Art der Blockverschlüsselung soll alle bekannten Verschlüsselungstechniken der Verwirrung (confusion), Durchmischung (diffusion) usw. ausnützen und vor allem einen längeren Schlüssel verwenden.

Die Lösung dieser Aufgabe wird durch den kennzeichnenden Teil der unabhängigen Ansprüche gegeben. Die abhängigen Ansprüche geben Ausgestaltungen der Erfindung an.

Im folgenden wird die Erfindung anhand von vierzehn Figuren beispielsweise näher beschrieben. Es zeigen:
Fig. 1 - grundsätzliches Blockschaltbild einer Einrichtung zur Übertragung von Nachrichten in verschlüsselter Form
Fig. 2 - Blockschaltbild einer Verschlüsselungseinheit
Fig. 3 - Blockschaltbild einer primären Verschlüsselungslogik
Fig. 4 - Wahrheitstabelle einer ersten Sorte von Operationseinheiten
Fig. 5 - Wahrheitstabelle einer zweiten Sorte von Operationseinheiten
Fig. 6 - Blockschaltbild einer erweiterten Verschlüsselungslogik
Fig. 7 - Wahrheitstabelle einer dritten Sorte von Operationseinheiten
Fig. 8 - Blockschaltbild einer ergänzenden Verschlüsselungslogik
Fig. 9 - Blockschaltbild einer Verschlüsselungsstufe
Fig. 10 - Tabelle von Schlüsselteilblöcken und Entschlüsselungsteilblöcken
Fig. 11 - Blockschaltbild einer zweiten ergänzenden Verschlüsselungslogik
Fig. 12 - Blockschaltbild einer zweiten Verschlüsselungsstufe
Fig. 13 - Blockschaltbild einer zweiten Verschlüsselungseinheit
Fig. 14 - Zweite Tabelle von Schlüsselteilblöcken und Entschlüsselungsteilblöcken.

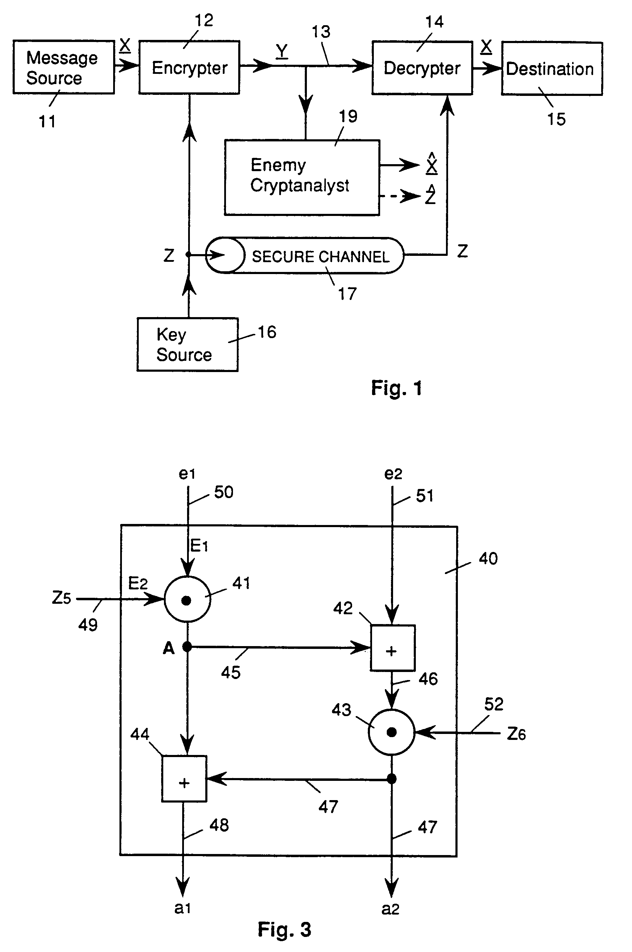

Fig. 1 zeigt ein grundsätzliches Blockschaltbild einer Einrichtung zur Übertragung von Nachrichten in verschlüsselter Form. Die zu übertragenden Nachrichten (Klartext X) entstehen in einer Nachrichtenquelle (message source) 11, z.B. einem Computer. Diese Nachrichten werden in einer Verschlüsselungseinheit (encrypter) 12 verschlüsselt und als Chiffriertext Y auf eine allgemein zugängliche Übertragungsleitung 13 ausgesandt. Der Chiffriertext Y erreicht auf der Empfängerseite eine Entschlüsselungseinheit (decrypter) 14, die ihn entschlüsselt einer Nachrichtensenke (destination) 15, z.B. einem zweiten Computer zuführt.

Die Verschlüsselungseinheit 12 und die Entschlüsselungseinheit 14 benützen für die Verschlüsselung bzw. die Entschlüsselung der Nachrichten einen geheimen Schlüsselblock Z, der durch eine Schlüsselquelle (key source) 16 bereitgestellt und auf einem sicheren Kanal (secure channel) 17 beiden Einheiten 12, 14 zugeführt wird. Dieser Kanal 17 ist beispielsweise ein Kurier mit versiegeltem Kuvert.

Der Chiffriertext Y auf der Übertragungsleitung 13 unterliegt stets der Gefahr, dass ein feindlicher Cryptanalysierer (enemy cryptanalyst) 19 diesen Text Y mitliest und versucht, den zugeordneten Klartext X oder den Schlüsselblock Z zu gewinnen. (Das Ergebnis dieser Versuche ist als X̂ und Ẑ bezeichnet.) Hiergegen sollte die Verschlüsselungsmethode (cipher) grundsätzlich oder doch wenigstens für eine genügend lange Zeit resistent sein.

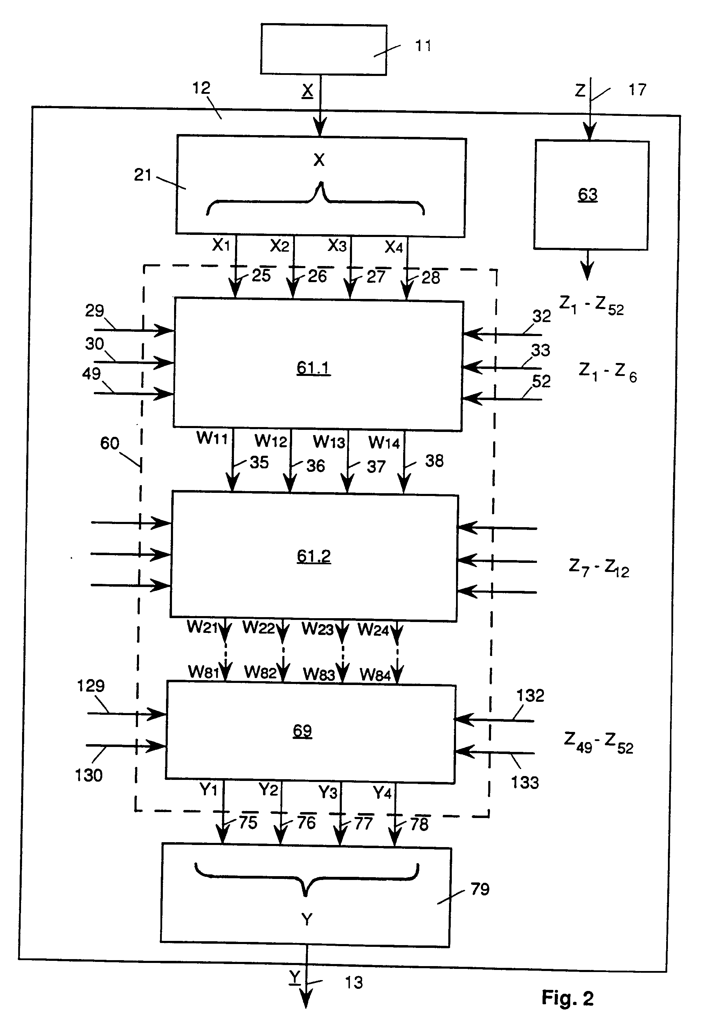

Fig. 2 zeigt ein Blockschaltbild der Verschlüsselungseinheit 12 für den Fall einer stufenweisen Blockverschlüsselung. Der zu verschlüsselnde Klartext X kommt laufend von der Nachrichtenquelle 11 und erreicht eine Eingangseinheit 21, z.B. für den Fall eines seriellen Bitstromes einen Serie/Parallel-Wandler. Dieser stellt schrittweise Klartextblöcke X von bevorzugt N = 64 Bit (erste Länge) zusammen, die in vier Teilblöcke X₁, X₂, X₃, X₄ von je m = 16 Bit (zweite Länge) aufgeteilt sind. Diese Klartextteilblöcke des jeweiligen Klartextblockes X erreichen über erste Eingänge 25 bis 28, jeweils aus sechzehn parallelen Leitungen bestehend, eine erste Verschlüsselungsstufe 61.1. In dieser Stufe 61.1 werden die Teilblöcke X₁ bis X₄ mit sechs verschiedenen Steuerblöcken mittels geeigneter logischer Funktionen zusammengemengt. Die (allgemeinen) Steuerblöcke sind beim Verschlüsselungsprozess (spezielle) Schlüsselteilblöcke Z₁ bis Z₆, beim Entschlüsselungsprozess Entschlüsselungsteilblöcke U₁ bis U₆, die jeweils aus dem Schlüsselblock Z abgeleitet werden. Hierauf wird später näher eingegangen. Im folgenden wird vorwiegend der Verschlüsselungsvorgang geschildert, weshalb der Begriff Schlüsselteilblock bevorzugt wird.

Die Schlüsselteilblöcke Z₁ bis Z₆ liegen an zweiten Eingängen 29, 30, 32, 33, 49, 52 der ersten Verschlüsselungsstufe 61.1 an. Sie sowie weitere Schlüsselteilblöcke Z₇ bis Z₅₂ werden von einer Schlüsselteilblockerzeugungseinheit 63 abgegeben. Diese Einheit 63 erhält über den sicheren Kanal 17 den gewählten Schlüsselblock Z, der bevorzugt eine Sequenz von K = 128 Bit bildet.

Das Verfahren zur Gewinnung der Schlüsselteilblöcke Z₁ bis Z₈ aus dem Schlüsselblock Z besteht darin, dass dieser in acht gleiche Teile von je 16 Bit Länge unterteilt wird. Anschliessend werden die 128 Bit des Schlüsselblocks Z zyklisch um 25 Bit in einer einheitlichen Richtung, z.B. nach links, verschoben (zyklisch vertauscht) und die so entstandene neue Sequenz von 128 Bit wiederum in acht gleiche Teile geteilt zur Bildung der Schlüsselteilblöcke Z₉ bis Z₁₆, und so fort bis zur Bildung von Z₅₂. Jeder Schlüsselteilblock Z₁ bis Z₅₂ besitzt somit eine (zweite) Länge m von 16 Bit, ist auf eindeutige Weise vom Schlüsselblock Z abgeleitet und unterscheidet sich im allgemeinen von jedem anderen Schlüsselteilblock.

Die Schlüsselteilblöcke Z₁ bis Z₆ liegen an den genannten sechs zweiten Eingängen 29, 30, 32, 33, 49, 52 der ersten Verschlüsselungsstufe 61.1 an. Das Ergebnis des Zusammenmengens in dieser Stufe 61.1 erscheint an vier Ausgängen bzw. Verbindungen 35 bis 38, und zwar als vier erste Zwischenteilblöcke W₁₁, W₁₂, W₁₃, W₁₄ von jeweils m = 16 Bit, die zusammen einen ersten Zwischenblock W₁ der (ersten) Länge N = 64 Bit bilden.

Die ersten Zwischenteilblöcke W₁₁ bis W₁₄ liegen für den zweiten Verschlüsselungsschritt an den Verbindungen bzw. Eingängen 35 bis 38 (identisch mit den Ausgängen der vorhergehenden Stufe 61.1) einer zweiten Verschlüsselungsstufe 61.2 an. Diese Verschlüsselungsstufe 61.2 ist identisch aufgebaut wie die erste Verschlüsselungsstufe 61.1. An ihren sechs zweiten Schlüsseleingängen liegen die beschriebenen Schlüsselteilblöcke Z₇ bis Z₁₂ an und an ihren Ausgängen erscheinen die zweiten Zwischenteilblöcke W₂₁, W₂₂, W₂₃, W₂₄ bzw. insgesamt der zweite Zwischenblock W₂.

Die zweiten Zwischenteilblöcke W₂₁ bis W₂₄ liegen für den dritten Verschlüsselungsschritt an einer dritten, nicht gezeigten Verschlüsselungsstufe an, die dritten Zwischenteilblöcke W₃₁ bis W₃₄ an einer vierten Verschlüsselungsstufe usw. bis zu einer neunten, von den vorhergehenden Stufen verschiedenen Verschlüsselungsstufe 69 mit vier zweiten Eingängen 129, 130, 132, 133.

An den Ausgängen 75 bis 78 der neunten Stufe 69 erscheinen schliesslich vier Chiffriertextteilblöcke Y₁, Y₂, Y₃, Y₄ der zweiten Länge m = 16 Bit, die zusammen einen Chiffriertextblock Y bilden, der dem jeweiligen Klartextblock X auf komplizierte, jedoch eineindeutige Weise zugeordnet ist. Dieser Chiffriertextblock Y wird in einer Ausgangseinheit 79, z.B. einem Parallel/Serie-Wandler, so umgewandelt, dass er auf die Übertragungsleitung 13 ausgesandt werden kann.

Der Verschlüsselungsprozess erfolgt somit in neun sukzessive aufeinander folgenden Verschlüsselungsstufen 61.1, 61.2, 69, von denen die ersten acht miteinander identisch sind. Als Schlüssel dienen dabei die insgesamt zweiundfünfzig genannten verschiedenen Schlüsselteilblöcke Z₁ bis Z₅₂. Die für den Verschlüsselungsprozess X --> Y notwendige Verschlüsselungseinheit 60 ist in Fig. 2 gestrichelt angegeben.

Die Realisierung der Verschlüsselungsstufen 61.1, 61.2, 69 kann auf verschiedene Weisen erfolgen. Zum einen kann eine sogenannte Software-Lösung vorgesehen werden, bei der ein oder mehrere Prozessoren nach einem vorgegebenen Programm arbeiten. Hierbei kann zum Beispiel jedem Eingang (z.B. den ersten Eingängen 25 bis 28) ein eigener Prozessor zugeordnet werden, der die jeweils m = 16 parallelen Leitungen jedes Eingangs seriell berücksichtigt. Zum anderen kann auch eine Hardware-Lösung vorgesehen sein, bei der die logischen Funktionsglieder als eigenständige Schaltungseinheiten vorliegen. Diese sind dann entweder aufgebaut aus diskreten Chipelementen oder bevorzugt aus wenigen Grossintegrationsbausteinen (very large scale integration VLSI). Bei der Hardware-Lösung werden bevorzugt alle Leitungen aller Eingänge parallel behandelt. Jedoch ist auch hier ein teilweises Serie-Vorgehen möglich, indem z.B. die verschiedenen Eingänge (z.B. 25 bis 28) über Multiplexer seriell an teil-zentrale Schaltungseinheiten angeschaltet werden.

Die Hardware-Lösung hat gegenüber der Software-Lösung den Vorteil, dass sie wesentlich schneller arbeiten kann, und zwar bis zu Taktfrequenzen von etwa 100 Mbit/s und mehr. Im folgenden wird daher und aus Gründen der Darstellung die Hardware-Lösung für die Verschlüsselungsstufen 61.1, 61.2, 69 in den Vordergrund gestellt.

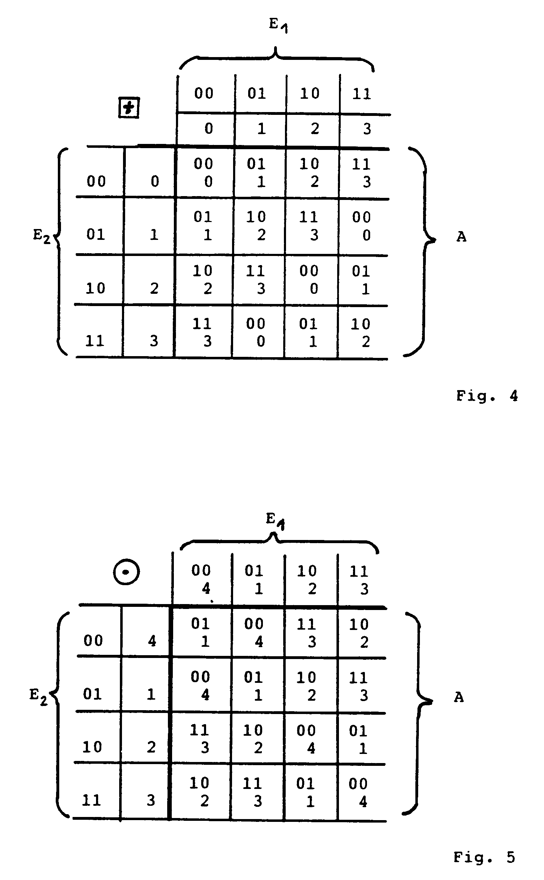

Fig. 3 zeigt das Blockschaltbild einer primären Verschlüsselungslogik 40. Diese Logik umfasst vier Operationseinheiten 41 bis 44 zweier unterschiedlicher Sorten 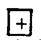 , 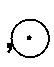 , die untereinander durch drei Verbindungen 45 bis 47 verbunden sind, von denen die letzte (47) gleichzeitig einen Ausgang der Logik 40 bildet. Dazu kommt ein weiterer Ausgang 48 sowie zwei erste Eingänge 50, 51 und zwei zweite Eingänge 49, 52 der Logik 40.

Jede Operationseinheit 41 bis 44 hat zwei Eingänge und einen Ausgang. Jeder Eingang und Ausgang ist ausgebildet als ein 16-Bit-Parallel-Ein- bzw. Ausgang, an dem bitparallel ein 16-Bit-Block anliegt. Entsprechend sind die Operationseinheiten 41 bis 44 ausgebildet zum logischen Zusammenfügen jeweils zweier Eingangsblöcke E₁, E₂ und zur Bildung eines zugeordneten Ausgangsblocks A von 16 Bit. Verfahrensmässig sind die Operationseinheiten in vier Stufen hintereinander geschaltet, wobei die beiden Sorten der Einheiten 41 bis 44 sich abwechseln.

Die Operationseinheiten der ersten Sorte 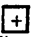 , d.h. die Einheiten 42 und 44, haben folgende Eigenschaften: Diese Einheiten betrachten jeden Eingangsblock E₁, E₂ als eine ganze Zahl in Binärdarstellung, wobei diese Zahl dem Zahlensatz bzw. der Menge {0, 1, 2,..., (2^{m}-1)} angehört (Die Zahl m (zweite Länge) ist dabei bevorzugt die Zahl 16, kann aber auch 4 oder 8 sein). Die Einheiten 42, 44 bilden sodann die Summe modulo 2^{m} aus den Eingangsblöcken E₁, E₂ und geben einen entsprechenden Ausgangsblock A ab. Die Operationseinheiten 42, 44 der ersten Sorte sind damit Addierer modulo 2^{m}.

Fig. 4 zeigt die Wahrheitstabelle für diese erste Sorte 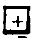 von Operationseinheiten 42, 44, und zwar als Beispiel für m = 2. Hierbei sind die beiden Eingangsblöcke E₁, E₂ sowie der Ausgangsblock A jeweils als Zahl in Binär- und in Dezimaldarstellung angegeben.

Die Operationseinheiten 41, 43 der zweiten Sorte 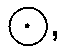 , haben folgende Eigenschaften: Diese Einheiten betrachten den Block, dessen Bits alle Null sind, als ganze Zahl 2^{m}. Ansonsten betrachten sie die Blöcke als ganze Zahlen in Binärdarstellung, wobei diese Zahlen dem Zahlensatz bzw. der Menge {1, 2, 3,..., (2^{m}-1)} angehört (m = 4, 8 oder 16). Der jeweilige Ausgangsblock A ist sodann das Produkt modulo (2^{m}+1) der Eingangsblöcke E₁, E₂. Die Einheiten 41, 43 sind damit Multiplizierer modulo (2^{m}+1). Fig. 5 zeigt die Wahrheitstabelle für diese zweite Sorte 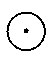 von Operationseinheiten 41, 43 für m = 2, wiederum als Beispiel und entsprechend der Wahrheitstabelle von Fig. 4.

Die primäre Verschlüsselungslogik 40 bewirkt eine sehr gute Durchmischung (diffusion), da jeder ihrer beiden Ausgangsblöcke a₁, a₂ von beiden Eingangsblöcken e₁, e₂ und von den beiden Schlüsselteilblöcken Z₅, Z₆, also von den Werten an allen Eingängen abhängt. Es ist nachweisbar, dass hierbei die Anzahl von vier Operationen ein Minimum zur Erfüllung dieser Aufgabe der Durchmischung bildet. Zur Erzeugung der notwendigen Verwirrung (confusion) dient die genannte Verwendung von Operationseinheiten verschiedener Sorten.

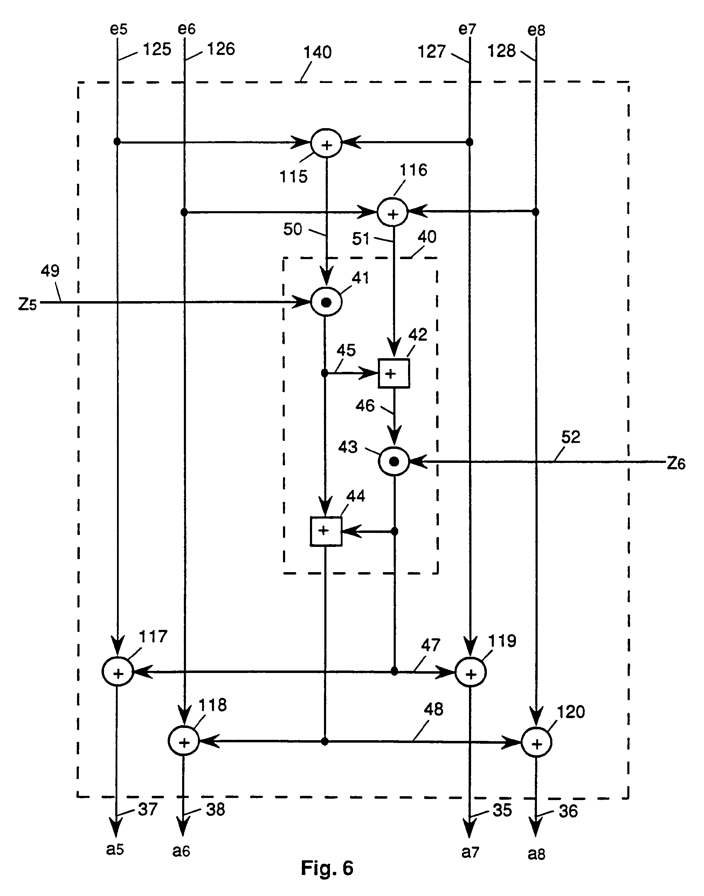

Fig. 6 zeigt das Blockschaltbild einer erweiterten Verschlüsselungslogik 140. Diese Verschlüsselungslogik weist vier erste Eingänge 125 bis 128 für vier parallel zu verschlüsselnde Eingangsblöcke e₅ bis e₈ auf, vier Ausgänge 35 bis 38 für die Abgabe von vier Ausgangsblöcken a₅ bis a₈ und zwei bereits genannte zweite Eingänge 49, 52 für die Eingabe von zwei Schlüsselteilblöcken Z₅, Z₆.

Das Herz der erweiterten Verschlüsselungslogik 140 bildet die beschriebene primäre Logik 40. Diese ist ergänzt durch sechs Operationseinheiten 115 bis 120 einer dritten Sorte 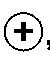 , und zwar so, dass der Eingang 125 auf die Einheiten 115 und 117 führt, dass der Eingang 126 auf die Einheiten 116 und 118 führt, dass der Eingang 127 auf die Einheiten 115 und 119 führt, dass der Eingang 128 auf die Einheiten 116 und 120 führt, dass die Ausgänge der Einheiten 115 und 116 die Eingänge 50 bzw. 51 der Logik 40 bilden, dass die Ausgänge 47, 48 der Logik 40 die Eingänge der Einheiten 117, 119 bzw. 118, 120 bilden, und dass die Ausgänge der Einheiten 117 bis 120 die Ausgänge 35 bis 38 bilden. Die erweiterte Verschlüsselungslogik 140 ist funktionsmässig so aufgebaut, dass jeder Ausgang 35 bis 38 von allen Eingängen 125 bis 128 und 49, 52 abhängt, dass jeweils Operationseinheiten unterschiedlicher Sorte 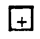 , 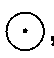 , 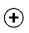 aufeinanderfolgen und dass die Eigenschaft der Involution gegeben ist. Diese letzte Eigenschaft bedeutet, dass die erweiterte Verschlüsselungslogik 140 eine selbst-inverse Funktion ist für die an ihren ersten Eingängen 125 bis 128 anliegenden Blöcke e₅ bis e₈, und zwar für jedes beliebige Paar von Schlüsselteilblöcken Z₅, Z₆.

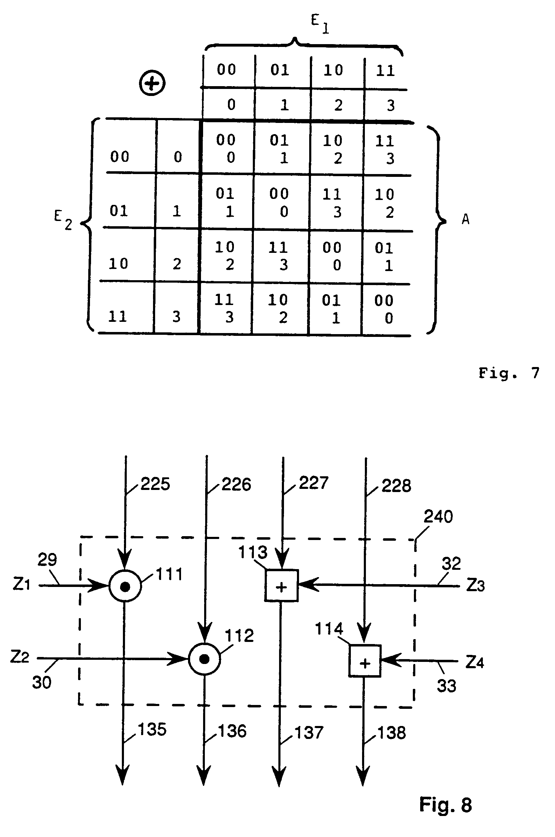

Als Operationseinheiten 115 bis 120 der dritten Sorte 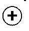 werden bevorzugt Bit-für-Bit-Exklusiv-ODER verwendet, wie sie vom genannten Standard DES bekannt sind. Fig. 7 gibt entsprechend den Figuren 4 und 5 die Wahrheitstabelle für ein Bit-für-Bit-Exklusiv-ODER und m = 2 an, wiederum nur als Beispiel zum Demonstrieren der Funktion.

Fig. 8 zeigt das Blockschaltbild einer ergänzenden Verschlüsselungslogik 240. Diese weist zwei Operationseinheiten 111, 112 der zweiten Sorte 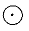 und zwei Operationseinheiten 113, 114 der ersten Sorte 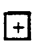 auf. Deren Eingänge sind jeweils ein erster Eingang 225 bis 228 zum Eingeben eines Eingangsblocks eₙ und ein zweiter Eingang 29, 30, 32, 33 zum Eingeben eines Schlüsselteilblocks Zₙ (n = 1 ... 4). Die Ausgänge der Logik 240 sind gleich den Ausgängen 135 bis 138 der Operationseinheiten 111 bis 114.

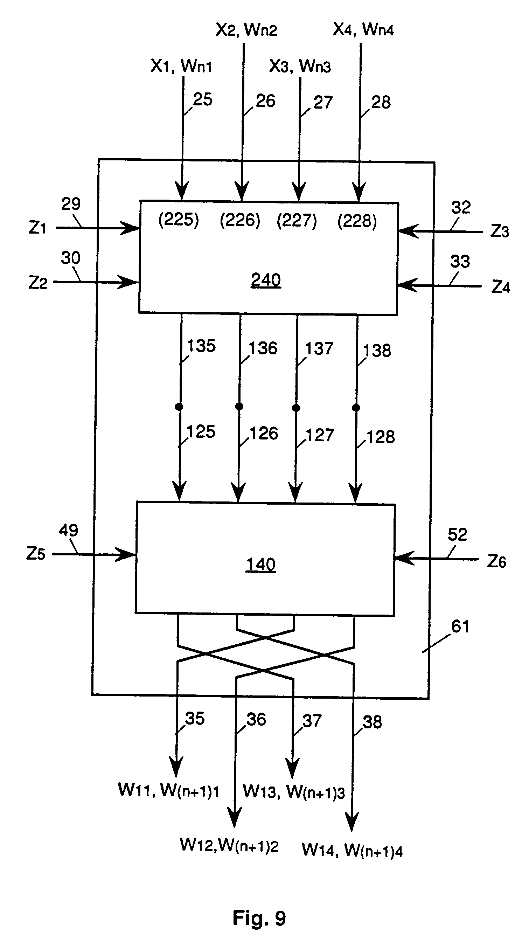

Fig. 9 zeigt das Blockschaltbild einer der ersten acht, gleichen Verschlüsselungsstufen Fig. 2, z.B. der ersten Stufe 61.1. Danach wird diese Verschlüsselungsstufe aus der Kombination einer ergänzenden Verschlüsselungslogik 240 und einer erweiterten Verschlüsselungslogik 140 gebildet, wobei die Ausgänge 135 bis 138 der Logik 240 direkt mit den Eingängen 125 bis 128 der nachfolgenden Logik 140 (galvanisch) verbunden sind. Die Eingänge 25 bis 28 der jeweiligen Verschlüsselungsstufe (61.1) sind identisch mit den Eingängen 225 bis 228 der ergänzenden Verschlüsselungslogik 240. Die Ausgänge der erweiterten Logik 140 bilden überkreuzt die Ausgänge 35 bis 38 der Verschlüsselungsstufe 61.1. An den zweiten Eingängen 29, 30, 32, 33, 49, 52 liegen sechs Schlüsselteilblöcke an, z.B., die Blöcke Z₁ bis Z₆, an den ersten Eingängen 25 bis 28 entweder vier Klartextteilblöcke X₁ bis X₄ oder vier Zwischenteilblöcke Wₙ₁ bis Wₙ₄. An den Ausgängen 35 bis 38 werden zugeordnet die Zwischenteilblöcke W₁₁ bis W₁₄ bzw. W₍ₙ₊₁₎₁ bis W₍ₙ₊₁₎₄ abgegeben (mit n = 1, 2, ... 7).

Die neunte Verschlüsselungsstufe 69 entspricht ausschliesslich der ergänzenden Verschlüsselungslogik 240, wobei die vier Ausgänge 135 bis 138 dieser Logik 240 identisch mit den vier Ausgängen 75 bis 78 der Verschlüsselungsstufe 69 sind.

Die Verschlüsselungseinheit 60 (Fig. 2) als Gesamtlogik zum Verschlüsseln von Klartextblöcken X, die jeweils einer Sequenz von 64 Bit entsprechen, weist insgesamt folgende Eigenschaften auf:
· Sie besitzt vier erste Eingänge 25 bis 28, zweiundfünfzig zweite Eingänge 28, 29, 30, 32, 33, 49, 52 und vier Ausgänge 75 bis 78.
· Sie weist acht identische Verschlüsselungsstufen 61.1, 61.2 plus eine sonstige Verschlüsselungsstufe 69 auf.
· Sie weist einhundertsechzehn Operationseinheiten von insgesamt drei verschiedenen Sorten 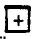 , 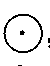 , 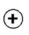 auf.
· In Flussrichtung der logischen Operationen wechseln generell und stets die Sorten 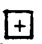 , 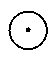 , 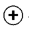 der aufeinander folgenden Operationen.
· Sie ist sowohl zum Verschlüsseln von Klartextblöcken X als auch zum Entschlüsseln von Chiffriertextblöcken Y geeignet.
· Jeder Block an den Ausgängen 75 bis 78 ist von allen Blöcken an den ersten Eingängen 25 bis 28 und von fast allen Blöcken an den zweiten Eingängen 29, 30, 32, 33, 49, 52 abhängig, insgesamt von dreiundfünfzig Blöcken. (Nicht abhängig sind die Ausgangsblöcke von jeweils drei Blöcken, die an den zweiten Eingängen 129, 130, 132, 133 der neunten Verschlüsselungsstufe 69 anliegen.)
· Bei jeder der ersten acht Verschlüsselungsstufen 61.1, 61.2 der Verschlüsselungseinheit 60 ist jedes Bit jedes Blockes W₍ₙ₊₁₎₁, bis W₍ₙ₊₁₎₄, an den Ausgängen 35 bis 38 abhängig von allen Bits aller Blöcke Wₙ₁ bis Wₙ₄ und Zₙ an den ersten (25 bis 28) bzw. zweiten Eingängen 29, 30, 32, 33, 49, 52.

Aufgrund der genannten Eigenschaften, kann eine Verschlüsselungseinheit 60 entweder zum Verschlüsseln eines Klartextblockes X dienen oder zum Entschlüsseln eines Chiffriertextblockes Y. Die Einheit 60 ist damit sowohl einsetzbar für den Verschlüsselungsprozess X --> Y als auch für den Entschlüsselungsprozess Y --> X.

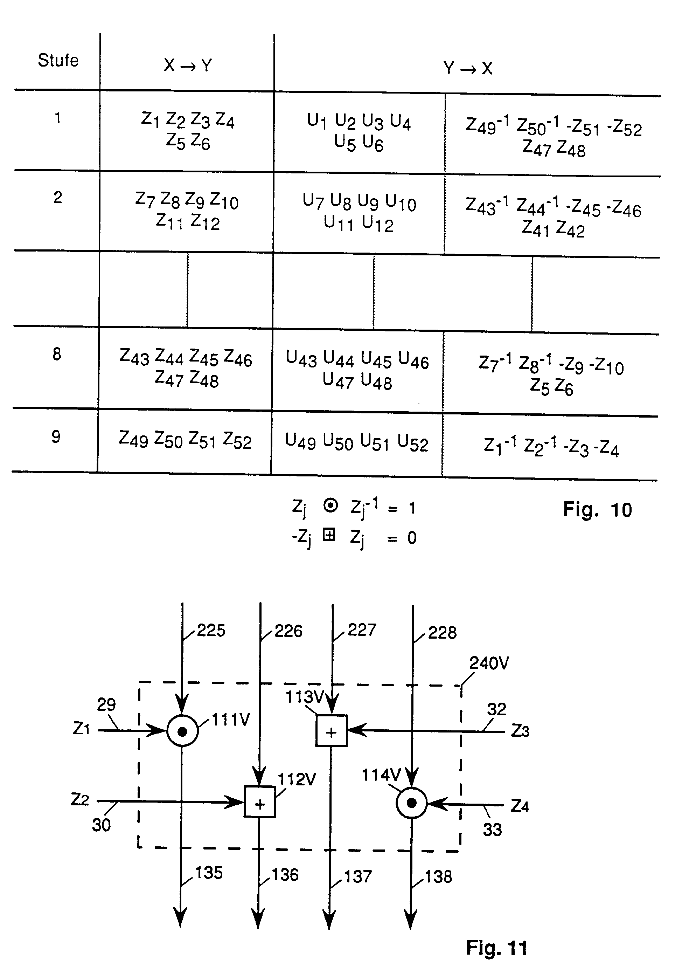

Der für den Verschlüsselungsprozess verwendete Schlüsselblock Z und die von diesem abgeleiteten zweiundfünfzig Schlüsselteilblöcke Z₁ bis Z₅₂ wurden bereits beschrieben. Fig. 10 zeigt nun zweiundfünfzig Entschlüsselungsteilblöcke U₁ bis U₅₂, die für den Entschlüsselungsprozess Y --> X zu verwenden sind, und zwar im Vergleich zu den Schlüsselteilblöcken Z₁ bis Z₅₂ und in ihrer Beziehung zu diesen Schlüsselteilblöcken und zu den neun Verschlüsselungsstufen 61.1, 61.2, 69 (Fig. 2).

Beim Verschlüsseln X --> Y werden in der ersten Stufe die Schlüsselteilblöcke Z₁ bis Z₆ verwendet, in der zweiten Stufe die Blöcke Z₇ bis Z₁₂ und so fort. In der neunten Stufe werden schliesslich die Blöcke Z₄₉ bis Z₅₂ verwendet.

Beim Entschlüsseln Y --> X gilt für jede Stufe i:
· Die ersten beiden Entschlüsselungsteilblöcke jeder Stufe i (i = 1, 2 ..... 9) des Entschlüsselungsprozesses Y --> X sind gleich dem modulo-(2¹⁶+1)-Multiplikation-Inversen des jeweils ersten und zweiten Schlüsselteilblockes in der (10-i)-ten Stufe des Verschlüsselungsprozesses X --> Y. Dies bedeutet z.B. für die ersten beiden Entschlüsselungsteilblöcke U₁, U₂ der ersten Stufe:
   U₁ = Z⁻¹₄₉; U₂ = Z⁻¹₅₀.
· Der dritte und vierte Entschlüsselungsteilblock in der i-ten Stufe (i = 1, 2 .... 9) des Entschlüsselungsprozesses Y --> X sind die Negativwerte der modulo-2¹⁶-Addition des dritten und des vierten Schlüsselteilblockes in der (10-i)-ten Stufe des Verschlüsselungsprozesses X --> Y. Dies bedeutet z.B. für die Entschlüsselungsteilblöcke U₃, U₄ der ersten Stufe: U₃ = -Z₅₁; U₄ = -Z₅₂.
· Der fünfte und sechste Entschlüsselungsteilblock in der i-ten Stufe (i = 1, 2 ... 8) des Entschlüsselungsprozesses Y --> X sind gleich dem fünften bzw. sechsten Schlüsselteilblock in der (9-i)-ten Stufe des Verschlüsselungsprozesses X --> Y. Dies bedeutet z.B. für die Entschlüsselungsteilblöcke U₅, U₆ der ersten Stufe: U₅ = Z₄₇; U₆ = Z₄₈.

Hierbei gilt Z⁻¹ⱼ modulo-(2¹⁶+1)-multipliziert mit Zⱼ ist 1. Weiter gilt -Zⱼ modulo-2¹⁶-addiert mit Zⱼ ist 0.

Die Erfindung erlaubt eine grosse Anzahl von Varianten. Einige hiervon werden nachfolgend aufgezählt.
· Es werden andere Sorten von Operationseinheiten 42 bis 44, 111 bis 114, 115 bis 120 verwendet.
· Es werden die verschiedenen Sorten der Operationseinheiten 41 bis 44, 111 bis 114, 115 bis 120 in den verschiedenen genannten Logiken 40, 240, 140 anders verteilt. Zum Beispiel werden die Operationseinheiten der beiden Sorten 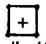 , 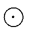 in der primären Verschlüsselungslogik 40 gegeneinander vertauscht. Es ist aber auch möglich, die primäre Verschlüsselungslogik 40 aufwendiger aufzubauen und/oder die zweiten Eingänge 49, 52 bei einer solchen Variante wegzulassen.
· Es werden weniger oder mehr als acht identische Verschlüsselungsstufen 61.1, 61.2 verwendet. Allgemein wird eine erste Mehrzahl S von Stufen vorgesehen, der dann eine zweite Mehrzahl T von Schlüsselteilblöcken zugeordnet ist. Als Beziehung zwischen T und S gilt T = 6 · S + 4. In diesem allgemeinen Fall gilt für die Beziehungen zwischen den Entschlüsselungsteilblöcken U₁ bis U_{T} und den Schlüsselteilblöcken Z₁ bis Z_{T}:
   - die ersten beiden Entschlüsselungsteilblöcke jeder Stufe i (i = 1, 2 ..... (S+1)) sind gleich dem Modulo-(2^{m}+1)-Multiplikation-Inversen des ersten bzw. zweiten Schlüsselteilblockes des jeweils ersten und zweiten Schlüsselteilblockes in der (S-i+2)-ten Stufe des Verschlüsselungsprozesses,
   - der dritte und der vierte Entschlüsselungsteilblock in der i-ten Stufe (i = 1, 2 .... (S+1)) sind gleich dem Modulo-2^{m}-Addition-Inversen des dritten bzw. des vierten Schlüsselteilblockes in der (S-i+2)-ten Stufe des Verschlüsselungsprozesses, und
   - der fünfte und der sechste Entschlüsselungsteilblock in der i-ten Stufe (i = 1, 2 ... S) sind gleich dem fünften bzw. dem sechsten Schlüsselteilblock in der (S-i+1)-ten Stufe des Verschlüsselungsprozesses.
· Es kann das Prinzip durchbrochen werden, dass stets die Sorten 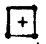 , 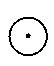 , 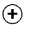 der unmittelbar aufeinanderfolgenden Operationseinheiten verschieden sind. Es ist jedoch vorteilhaft, wenn wenigstens die überwiegende Mehrzahl aller Paare direkt aufeinanderfolgender Operationen aus zwei Operationen unterschiedlicher Sorte 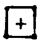 , 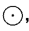 , 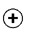 bestehen.
· Die Ableitung der Schlüsselteilblöcke Z₁ bis Z₅₂ aus dem Schlüsselblock Z erfolgt nach einem anderen als dem beschriebenen Verfahren.
· Der Aufbau der Verschlüsselungseinheit 60 erfolgt vorwiegend unter Benützung von diskreten Operationseinheiten 41 bis 44, 111 bis 114, 115 bis 120 als spezielle Logikeinheiten (Hardware-Lösung), vorwiegend unter Benützung handelsüblicher Prozessoren und Speicher, die nach einem zugeordneten Programm arbeiten (Software-Lösung) oder in gemischter Bauweise.

Jede der beschriebenen Logiken 40, 140, 240, 60, 61.1, 61.2, 69 kann als "Black-Box" aufgefasst werden mit ersten und zweiten Eingängen und Ausgänge. Jede dieser Logiken wandelt die an den ersten Eingängen anliegenden zwei oder vier ersten Teilblöcke in zugeordnete zweite Teilblöcke der gleichen Länge um, die an den Ausgängen abgreifbar sind. Der Umwandlungsprozess wird dabei durch die an den zweiten Eingängen anliegenden Schlüsselteilblöcke beeinflusst, bzw. allgemeiner durch geeignete Steuerblöcke. Parallele Eingänge und Ausgänge sind vorteilhaft, wenn höhere Arbeitsgeschwindigkeiten gewünscht sind. Für die genannte Software-Lösung ist bevorzugt ein einziger erster und zweiter Eingang und ein einziger Ausgang vorzusehen, über welche die zugeordneten Ein- und Ausgangsblöcke seriell ein- bzw. ausgegeben werden.

Für den Umwandlungsprozess ist es entscheidend, dass die (zweite) Länge m entweder 4, 8 oder bevorzugt 16 Bit beträgt.

Ausser den in der Aufgabenstellung genannten Eigenschaften besitzt die Erfindung die vorteilhafte, weitere Eigenschaft, dass sie im Aufbau relativ unkompliziert ist und sowohl in der Hardware-, als auch in der Software-Version schnell und problemlos arbeitet. Die Verschlüsselungslogiken 40, 140, 240 sind aus VLSI-Halbleiterbausteine aufbaubar (VLSI very large scale integration) und damit preiswert herstellbar.

Im folgenden wird eine konkrete weitere Variante anhand der Figuren 11 bis 14 beschrieben, die Abwandlungen der Figuren 8, 9, 2 und 10 sind.

Fig. 11 zeigt das Blockschaltbild einer zweiten ergänzenden Verschlüsselungslogik 240v. Diese weist zwei Operationseinheiten 111v, 114v der zweiten Sorte 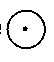 und zwei Operationseinheiten 112v, 113v der ersten Sorte 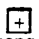 auf. Deren Eingänge sind jeweils ein erster Eingang 225 bis 228 zum Eingeben eines Eingangsblocks eₙ und ein zweiter Eingang 29, 30, 32, 33 zum Eingeben eines Schlüsselteilblocks Zₙ (n = 1 ... 4). Die Ausgänge der Logik 240 sind gleich den Ausgängen 135 bis 138 der Operationseinheiten 111v bis 114v.

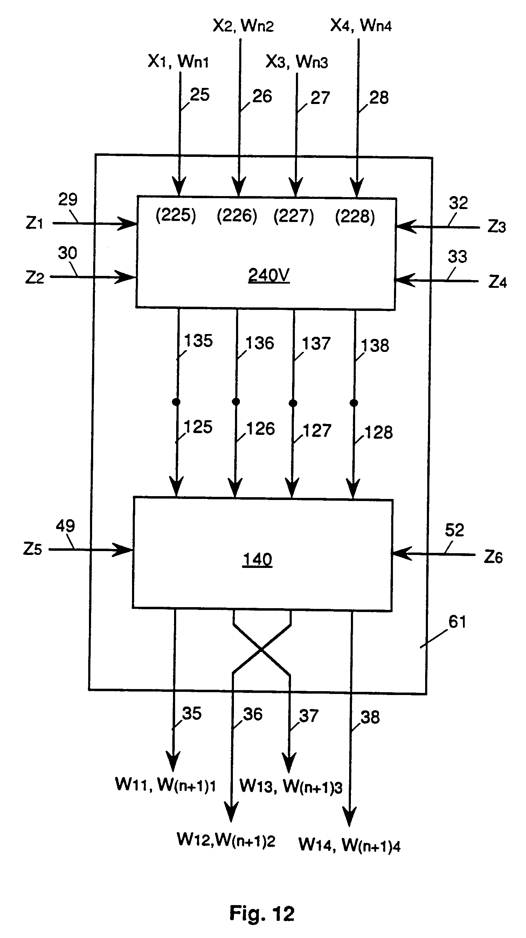

Fig. 12 zeigt das Blockschaltbild einer zweiten Verschlüsselungsstufe 61.1v. Diese wird aus der Kombination der ergänzenden Verschlüsselungslogik 240v und einer erweiterten Verschlüsselungslogik 140 gebildet, wobei die Ausgänge 135 bis 138 der Logik 240v direkt mit den Eingängen 125 bis 128 der nachfolgenden Logik 140 (galvanisch) verbunden sind. Die Eingänge 25 bis 28 der jeweiligen Verschlüsselungsstufe (61.1v) sind identisch mit den Eingängen 225 bis 228 der zweiten, ergänzenden Verschlüsselungslogik 240v. Die Ausgänge der erweiterten Logik 140 bilden direkt die Ausgänge 35 und 38 sowie überkreutzt die Ausgänge 36 und 37 der Verschlüsselungsstufe 61.1v. Der weitere Aufbau entspricht vollständig demjenigen von Fig. 9.

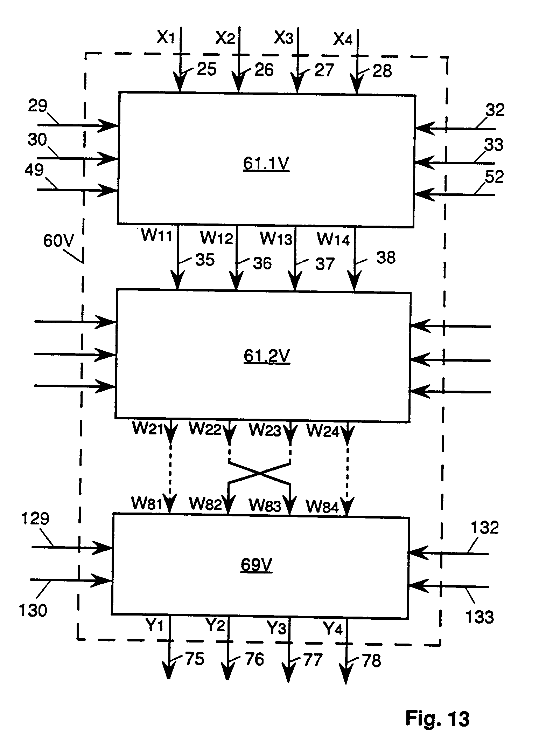

Fig. 13 zeigt das Blockschaltbild einer zweiten Verschlüsselungseinheit 60v, das weitgehend der Fig. 2 entspricht. Es sind hierbei acht gleiche zweite Verschlüsselungsstufen 61.1v, 61.2v hintereinander geschaltet, denen als letzte Stufe 69v eine zweite, ergänzende Verschlüsselungslogik 240v nachgeschaltet ist. Hierbei sind die Eingänge W₈₂ und W₈₃ kreuzweise mit ...W₂₂ bzw. ...W₂₃ verbunden.

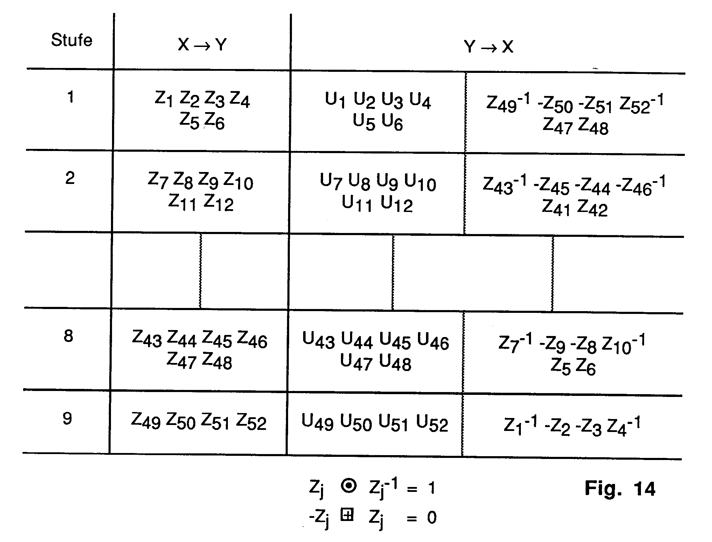

Fig. 14 zeigt schliesslich eine zweite Tabelle von Schlüsselteilblöcken Zₙ und Entschlüsselungsteilblöcken Uₙ, entsprechend Fig. 10.

Beim Verschlüsseln X --> Y werden unverändert in der ersten Stufe die Schlüsselteilblöcke Z₁ bis Z₆ verwendet, in der zweiten Stufe die Blöcke Z₇ bis Z₁₂ und so fort. In der neunten Stufe werden schliesslich die Blöcke Z₄₉ bis Z₅₂ verwendet.

Beim Entschlüsseln Y --> X gilt für jede Stufe i:
· Der erste und der vierte Entschlüsselungsteilblock jeder Stufe i (i = 1, 2 ..... 9) des Entschlüsselungsprozesses Y --> X sind gleich dem Modulo-(2¹⁶+1)-Multiplikation-Inversen des jeweils ersten und vierten Schlüsselteilblockes in der (10-i)-ten Stufe des Verschlüsselungsprozesses X --> Y. Dies bedeutet z.B. für den ersten und den vierten Entschlüsselungsteilblock U₁, U₄ der ersten Stufe:
   U₁ = Z⁻¹₄₉; U₄ = Z⁻¹₅₂.
· Der zweite und dritte Entschlüsselungsteilblock in der i-ten Stufe (i = 2, 3 .... 8) des Entschlüsselungsprozesses Y --> X sind die Negativwerte der Modulo-2¹⁶-Addition des dritten und des zweiten Schlüsselteilblockes in der (10-i)-ten Stufe des Verschlüsselungsprozesses X --> Y. Dies bedeutet z.B. für die Entschlüsselungsteilblöcke U₈, U₉ der zweiten Stufe: U₈ = -Z₄₅; U₉ = -Z₄₄.
· Der zweite und dritte Entschlüsselungsteilblock in der ersten und neunten Stufe des Entschlüsselungsprozess Y --> X sind die Negativwerte der Modulo -2¹⁶-Addition des zweiten bzw. dritten Schlüsselteilblockes in der neunten bzw. ersten Stufe des Verschlüsselungsprozesses X --> Y. Dies bedeutet z. B. für die Entschlüsselungsteilblöcke U₂, U₃ der ersten Stufe: U₂ = -Z₅₀, U₃ = -Z₅₁.
· Der fünfte und sechste Entschlüsselungsteilblock in der i-ten Stufe (i = 1, 2 ... 8) des Entschlüsselungsprozesses Y --> X sind gleich dem fünften bzw. sechsten Schlüsselteilblock in der (9-i)-ten Stufe des Verschlüsselungsprozesses X --> Y. Dies bedeutet z.B. für die Entschlüsselungsteilblöcke U₅, U₆ der ersten Stufe: U₅ = Z₄₇; U₆ = Z₄₈.

Hierbei gilt wiederum Z⁻¹ⱼ modulo-(2¹⁶+1)-multipliziert mit Zⱼ ist 1. Weiter gilt -Zⱼ modulo-2¹⁶-addiert mit Zⱼ ist 0.

## Patentansprüche

1. Vorrichtung für das Umwandeln jeweils eines beliebigen ersten binären Digitalblockes einer ersten Länge (N) in einen zugeordneten, zweiten binären Digitalblock gleicher Länge (N) unter Verwendung von wenigstens einem frei wählbaren, binären Steuerblock,
gekennzeichnet
- durch wenigstens einen ersten Eingang (25-26; 50, 51; 125-128) zum Eingeben von wenigsten zwei ersten Teilblöcken (X₁-X₄; e₁, e₂; e₅-e₈) einer zweiten Länge (m), die zusammen den ersten Digitalblock (X; Wₙ) bilden,
- durch wenigstens einen zweiten Eingang (29, 30, 32, 33, 99, 52, 129, 130, 133) zum Eingeben von wenigsten zwei Steuerblöcken (Z₁-Z₅₂) der zweiten Länge (m),
- durch eine Logik (90, 60, 61.1, 61.2, 140), die jeweils nacheinander wenigstens vier logische Operationen wenigstens zweier unterschiedlicher Sorten ( 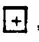 , 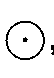 , 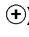 ) durchführt,
· wobei wenigstens die überwiegende Zahl aller Paare unmittelbar aufeinanderfolgender Operationen aus zwei Operationen unterschiedlicher Sorten ( 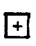 , 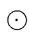 , 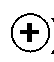 ) besteht,
· wobei durch jede Operation jeweils zwei Eingangsblöcke (E₁, E₂) der zweiten Länge (m) in einen Ausgangsblock (A) dieser Länge (m) umgewandelt werden,
· wobei als Eingangsblöcke (E₁, E₂) erste Teilblöcke (X₁-X₄; e₁, e₂; e₅-e₈), Steuerblöcke (Z₁-Z₅₂) und/oder Ausgangsblöcke (A) einer jeweils vorhergehenden Operation dienen, und
- durch wenigstens einen Ausgang (75-78; 47, 48; 35-38) zum Ausgeben von wenigstens zwei, den ersten Teilblöcken (X₁-X₄ ; e₁, e₂; e₅-e₈) zugeordneten, zweiten Teilblöcken (Wₙ₁-Wₙ₄, Y₁-Y₄; a₁, a₂; a₅-a₈) der zweiten Länge (m), die zusammen den zweiten Digitalblock (Wₙ, Y) bilden.

2. Vorrichtung nach Anspruch 1,
dadurch gekennzeichnet,
- dass wenigstens ein erster Eingang (50, 51) zum Eingeben von zwei ersten Teilblöcken (e₁, e₂) vorgesehen ist,
- dass wenigstens ein zweiter Eingang (49, 52) zum Eingeben von zwei Steuerblöcken (Z₅, Z₆) vorgesehen ist,
- dass die Logik eine primäre Verschlüsselungslogik (40) ist, die jeweils vier logische Operationen zweier unterschiedlicher Sorten ( 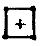 , 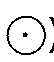 ) durchführt,
· wobei nacheinander durch die erste Operation der eine erste Teilblock mit dem einen Steuerblock (Z₅) nach der einen Sorte ( 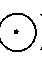 ) operiert wird,
- durch die zweite Operation der andere erste Teilblock (e₂) mit dem Ausgangsblock der ersten Operation nach der anderen Sorte ( 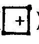 ) operiert wird,
- durch die dritte Operation der Ausgangsblock der zweiten Operation mit dem anderen Steuerblock (Z6) nach der einen Sorte ( 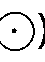 ) operiert wird, und
- durch ie vierte Operation der Ausgangsblock der ersten Operation und der Ausgangsblock der dritten Operation nach der anderen Sorte ( 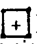 ) operiert wird, und
- dass wenigstens ein Ausgang (47, 48) zum Ausgeben von zwei zweiten Teilblöcken (a₁, a₂) vorgesehen ist,
· wobei der eine zweite Teilblock (a₁) der Ausgangsblock der vierten Operation und der andere zweite Teilblock (a₂) der Ausgangsblock der dritten Operation ist.

3. Vorrichtung nach Anspruch 1,
dadurch gekennzeichnet,
- dass wenigstens ein erster Eingang (125-128) zum Eingeben von vier ersten Teilblöcken (e₅-e₈) vorgesehen ist,
- dass die Logik eine erweiterte Verschlüsselungslogik (140) ist, die eine Zentrallogik umfasst und sechs logische Operationen der dritten Sorte ( 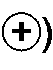 ) durchführt,
· wobei
- durch die erste und zweite Operation der dritten Sorte ( 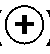 ) der erste (e₅) mit dem dritten (e₇) und der zweite (e₆) mit dem vierten ersten Teilblock (e₈) operiert werden,
- durch die Zentrallogik die Ausgangsblöcke der ersten und der zweiten Operation operiert werden,
- durch die dritte und vierte Operation der dritten Sorte ( 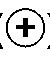 ) ein erstes Ausgangsblock der Zentrallogik mit dem ersten (e₅) zw. mit dem dritten ersten Teilblock (e₇) operiert wird, und
- durch die fünfte und sechste Operation der dritten Sorte ( 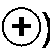 ) ein zweiter Ausgangsblock der Zentrallogik mit dem zweiten (e₆) bzw. dem vierten ersten Teilblock (e₈) operiert wird, und
- dass wenigstens ein Ausgang (35-38) zum Ausgeben von vier Teilblöcken (a₅ - a₈) vorgesehen ist,
· wobei der erste (a₅), der zweite (a₆), der dritte (a₇) und der vierte zweite Teilblock (a₈) zugeordnet der Ausgangsblock der dritten, der fünften, der vierten bzw. der sechsten Operation ist.

4. Vorrichtung nach Anspruch 2 und 3,
dadurch gekennzeichnet,
- dass wenigstens ein zweiter Eingang (49, 52) zum Eingeben von zwei Steuerblöcken (Z₅, Z₆) vorgesehen ist, und
- dass als Zentrallogik die primäre Verschlüsselungslogik (40) dient.

5. Vorrichtung nach Anspruch 1 und 4,
dadurch gekennzeichnet,
- dass wenigstens ein erster Eingang (25-28) zum Eingeben von vier ersten Teilblöcken (X₁-X₄; Wₙ₁-Wₙ₄) vorgesehen ist,
- dass wenigstens ein zweiter Eingang (29, 30, 32, 33, 49, 52) zum Eingeben von sechs Steuerblöcken (Z₁-Z₆) vorgesehen ist,
- dass die Logik eine Verschlüsselungsstufe (61.1, 61.2) ist, die jeweils vierzehn logische Operationen dreier unterschiedlicher Sorten ( 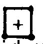 , 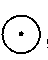 , 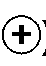 ) durchführt,
· wobei durch die ersten vier Operationen parallel der erste erste (X₁, Wₙ₁) und der zweite erste Teilblock (X₂, Wₙ₂) zugeordnet mit dem ersten (Z₁) und dem zweiten Steuerblock (Z₂) nach der zweiten Sorte ( 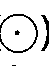 ) und der dritte erste (X₃, Wₙ₃) und der vierte erste Teilblock (X₄, Wₙ₄) zugeordnet mit dem dritten (Z₃) und dem vierten Steuerblock (Z₄) nach der ersten Sorte ( 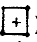 ) operiert werden,
· wobei die weiteren zehn Operationen diejenigen der erweiterten Verschlüsselungslogik (140,) sind, und
· wobei die Ausgangsblöcke der ersten vier Operationen die Eingangsblöcke der erweiterten Verschlüsselungslogik (140) sind, und
- dass wenigstens ein Ausgang (35-38) zum Ausgeben von vier zweiten Teilblöcken (W₁₁-W₁₄; W₍ₙ₊₁₎₁-W₍ₙ₊₁₎₄) vorgesehen ist,
die kreuzweise vertauscht den Ausgangsblöcken der erweiterten Verschlüsselungslogik (140) entsprechen.

6. Vorrichtung nach Anspruch 1 und 4,
dadurch gekennzeichnet,
- dass wenigstens ein erster Eingang (25-28) zum Eingeben von vier ersten Teilblöcken (X₁-X₄; Wₙ₁-Wₙ₄) vorgesehen ist,
- dass wenigstens ein zweiter Eingang (29, 30, 32, 33, 49, 52) zum Eingeben von sechs Steuerblöcken (Z₁-Z₆) vorgesehen ist,
- dass die Logik eine Verschlüsselungsstufe (61.1, 61.2) ist, die jeweils vierzehn logische Operationen dreier unterschiedlicher Sorten ( 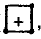 , 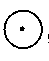 , 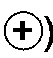 ) durchführt,
· wobei durch die ersten vier Operationen parallel der erste erste (X₁, Wₙ₁) und der dritte erste Teilblock (X₃, Wₙ₃) zugeordnet mit dem ersten (Z₁) und dem dritten Steuerblock (Z₃) nach der zweiten Sorte ( 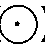 ) und der zweite erste (X₂, Wₙ₂) und der vierte erste Teilblock (X₄, Wₙ₄) zugeordnet mit dem zweiten (Z₂) und dem vierten Steuerblock (Z₄) nach der ersten Sorte ( 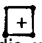 ) operiert werden,
· wobei die weiteren zehn Operationen diejenigen der erweiterten Verschlüsselungslogik (140,) sind, und
· wobei die Ausgangsblöcke der ersten vier Operationen die Eingangsblöcke der erweiterten Verschlüsselungslogik (140) sind, und
- dass wenigstens ein Ausgang (35-38) zum Ausgeben von vier zweiten Teilblöcken (W₁₁-W₁₄; W₍ₙ₊₁₎₁-W₍ₙ₊₁₎₄) vorgesehen ist, wobei der erste (35) und der vierte Ausgang (38) direkt und der zweite (36) und der dritte Ausgang (37) kreuzweise vertauscht den Ausgangsblöcken der erweiterten Verschlüsselungslogik (140) entsprechen.

7. Vorrichtung nach Anspruch 1 und 5,
dadurch gekennzeichnet,
- dass wenigstens ein erster Eingang (25-28) zum Eingeben von vier ersten Teilblöcken (X₁-X₄) vorgesehen ist,
- dass wenigstens ein zweiter Eingang (29, 30, 32, 33, 49, 52, 129, 130, 132, 133) zum Eingeben einer zweiten Mehrzahl (T) von Steuerblöcken (Z₁-Z₅₂) vorgesehen ist,
- dass die Logik eine Verschlüsselungseinheit (60) ist, die eine erste Mehrzahl (S) von gleichen Verschlüsselungsstufen (61.1, 61.2) umfasst, die so aufeinanderfolgen, dass die Ausgänge der jeweils vorausgehenden Stufe die Eingänge der jeweils nachfolgenden Stufe bilden,
- dass die Verschlüsselungseinheit (60) eine abweichende, letzte Verschlüsselungsstufe (69) umfasst, die parallel vier Operationen zweier unterschiedlicher Sorten ( 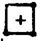 , 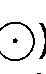 ) durchführt, und
- dass wenigstens ein Ausgang (75-78) zum Ausgeben von vier zweiten Teilblöcken (Y₁-Y₄) vorgesehen ist, die den Ausgangsblöcken der abweichenden, letzten Verschlüsselungsstufe (69) entsprechen,
· wobei die zweite Mehrzahl (T) gleich dem sechsfachen der ersten Mehrzahl (S) plus vier ist,
· wobei der erste (Wₙ₁) und der zweite Ausgangsblock (Wₙ₂) der vorausgehenden, letzten der gleichen Verschlüsselungsstufen (61.1, 61.2) zugeordnet mit dem (T-3)ten und dem (T-2)ten Steuerblock (Z₄₉, Z₅₀) nach der zweiten Sorte ( 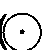 ) und der dritte (Wₙ₃) und der vierte Ausgangsblock der (Wₙ₄) der vorausgehenden Stufe mit dem (T-1)ten und dem T-ten Steuerblock (Z₅₁, Z₅₂) nach der ersten Sorte ( 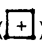 ) operiert werden.

8. Vorrichtung nach Anspruch 1 und 6,
dadurch gekennzeichnet,
- dass wenigstens ein erster Eingang (25-28) zum Eingeben von vier ersten Teilblöcken (X₁-X₄) vorgesehen ist,
- dass wenigstens ein zweiter Eingang (29, 30, 32, 33, 49, 52, 129, 130, 132, 133) zum Eingeben einer zweiten Mehrzahl (T) von Steuerblöcken (Z₁-Z₅₂) vorgesehen ist,
- dass die Logik eine Verschlüsselungseinheit (60v) ist, die eine erste Mehrzahl (S) von gleichen Verschlüsselungsstufen (61.1v, 61.2v) umfasst, die so aufeinanderfolgen, dass die Ausgänge der jeweils vorausgehenden Stufe die Eingänge der jeweils nachfolgenden Stufe bilden,
- dass die Verschlüsselungseinheit (60v) eine abweichende, letzte Verschlüsselungsstufe (69v) umfasst, die parallel vier Operationen zweier unterschiedlicher Sorten ( 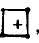 , 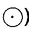 ) durchführt,
- dass wenigstens ein Ausgang (75-78) zum Ausgeben von vier zweiten Teilblöcken (Y₁-Y₄) vorgesehen ist, die den Ausgangsblöcken der abweichenden, letzten Verschlüsselungsstufe (69v) entsprechen.
· wobei die zweite Mehrzahl (T) gleich dem sechsfachen der ersten Mehrzahl (S) plus vier ist,
· wobei der erste (Wₙ₁) und der zweite Ausgangsblock (Wₙ₂) der vorausgehenden, letzten der gleichen Verschlüsselungsstufen (61.1v, 61.2v) zugeordnet mit dem (T-3)ten und dem (T-2)ten Steuerblock (Z₄₉, Z₅₀) nach der zweiten Sorte ( 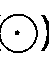 ) und der dritte (Wₙ₃) und der vierte Ausgangsblock (Wₙ₄) der vorausgehenden Stufe mit dem (T-1)ten und dem T-ten Steuerblock (Z₅₁, Z₅₂) nach der ersten Sorte ( 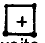 ) operiert werden, und
· wobei der zweite und der dritte Eingang der abweichenden, letzten Verschlüsselungsstufe (69v) miteinander vertauscht sind.

9. Vorrichtung nach Anspruch 7 oder 8,
dadurch gekennzeichnet,
dass die zweite Mehrzahl (T) gleich zweiundfünfzig und die erste Mehrzahl (S) gleich acht ist.

10. Vorrichtung nach Anspruch 1,
dadurch gekennzeichnet,
- dass die Operation einer ersten Sorte ( 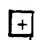 , Addition modulo 2^{m}) so geartet ist,
· dass jeder Eingangsblock (E₁, E₂) der Operation als ganze Zahl in Binärdarstellung und als Element der Menge {0, 1, 2, 3..., (2^{m}-1)} betrachtet wird, und
· dass der zugeordnete Ausgangsblock (A) die Binärdarstellung der Summe modulo 2^{m} der Eingangsblöcke (E₁, E₂) ist,
- dass die Operation einer zweiten Sorte ( 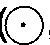 , Multiplikation modulo (2^{m}+1)) so geartet ist,
· dass, sofern alle Bits eines Blockes (E₂, E₂, A) Null sind, dieser Block als die ganze Zahl 2^{m} in Binärdarstellung betrachtet wird,
· dass ansonsten jeder Eingangsblock (E₁, E₂) als ganze Zahl in Binärdarstellung und als Element der Menge {1, 2, 3, ... (2^{m}-1)} betrachtet wird, und
· dass der jeweilige Ausgangsblock (A) in Binärdarstellung das Produkt modulo (2^{m}+1) der Eingangsblöcke (E₁, E₂) ist, und
- dass die Operation einer dritten Sorte ( 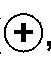 , Bit-für-Bit-Exklusiv -ODER) so geartet ist,
· dass jeder Block (E₁, E₂, A) der Operation als Bitfolge betrachtet wird, durch die jedem Bit eine feste Position zugeordnet wird,
· und dass in der durch diese Folge gegebenen Reihenfolge jedes Bit des Ausgangsblocks (A) das Exklusiv-ODER der zwei Bits der jeweils entsprechenden Position der beiden Eingangsblöcke (E₁, E₂) ist.

11. Vorrichtung nach Anspruch 10,
dadurch gekennzeichnet,
dass die zweite Länge (m) entweder vier, acht oder sechzehn ist.

12. Vorrichtung nach Anspruch 1,
dadurch gekennzeichnet,
dass zur Ausführung jeder einzelnen logischen Operation eine individuell zugeordnete Operationseinheit (41-44, 111-120) vorgesehen ist, die zwei Eingänge zum Eingeben der jeweiligen Eingangsblöcke (E₁, E₂) und einen Ausgang zur Ausgabe des jeweils zugeordneten Ausgangsblockes (A) aufweist.

13. Vorrichtung nach Anspruch 1,
dadurch gekennzeichnet,
dass zur Ausführung der logischen Operationen Operationseinheiten vorgesehen sind, die wenigstens einen gemeinsamen Prozessor umfassen, der die an seinen Eingängen anliegenden Eingangsblöcke entsprechend einem vorgegebenen Programm miteinander verknüpft.

14. Verwendung zweier Vorrichtungen nach Anspruch 7 zum Verschlüsseln eines digitalen Klartextes (X) und zum Entschlüsseln des zugeordneten Chiffriertextes (Y), wobei der Klartext (X) laufend von einer Nachrichtenquelle (11) und der Chiffriertext (Y) von einer Übertragungsleitung (13) abgegeben und blockweise durch eine jeweilige Eingangseinheit (21) den Eingängen (25-28) einer Verschlüsselungseinheit (60) bzw. einer mit dieser identischen Entschlüsselungseinheit als Klartextteilblöcke (X₁-X₄) bzw. Chiffriertextteilblöcke (Y₁-Y₄) einer zweiten Länge (m) zugeführt wird,
wobei zum Verschlüsseln und zum Entschlüsseln ein gemeinsamer, geheimer Schlüsselblock (Z) dient, und wobei die entstehenden Chiffriertextteilblöcke (Y₁-Y₄) bzw. die Klartextteilblöcke (X₁-X₄) der gleichen zweiten Länge (m) an eine jeweilige Ausgangseinheit (79) abgegeben und von dieser als Chiffriertext (Y) bzw. Klartext (X) laufend ausgegeben wird,
dadurch gekennzeichnet,
- dass aus dem Schlüsselblock (Z) als Steuerblöcke eine zweite Mehrzahl (T) Schlüsselteilblöcke (Z₁-Z_{T}) bzw. Entschlüsselungsteilblöcke (U₁-U_{T}) der zweiten Länge (m) gebildet und den Eingängen (29, 30, 32, 33, 49, 52, 129, 130, 132, 133) der Verschlüsselungseinheit (60) bzw. der Entschlüsselungseinheit zugeführt werden, die eine erste Mehrzahl (S) von gleichen, aufeinanderfolgenden Stufen (60.1, 60.2) aufweisen,
derart dass für jede Stufe i der Entschlüsselungseinheit
· ein erster und zweiter Entschlüsselungsteilblock jeder Stufe i (i = 1, 2 ..... (S+1)) gleich sind dem Modulo-(2^{m}+1)-Multiplikation-Inversen eines jeweils ersten bzw. zweiten Schlüsselteilblockes in der (S-i+2)-ten Stufe der Verschlüsselungseinheit (60),
· ein dritter und vierter Entschlüsselungsteilblock in der i-ten Stufe (i = 1, 2 .... (S+1)) gleich sind dem Negativwert der Modulo-2^{m}-Addition eines dritten bzw. vierten Schlüsselteilblockes in der (S-i+2)-ten Stufe der Verschlüsselungseinheit (60), und
· ein fünfter und sechster Entschlüsselungsteilblock in der i-ten Stufe (i = 1, 2 ... S) gleich sind dem fünften bzw. sechsten Schlüsselteilblock in der (S-i+1)-ten Stufe der Verschlüsselungseinheit (60).

15. Verwendung zweier Vorrichtungen nach Anspruch 8 zum Verschlüsseln eines digitalen Klartextes (X) und zum Entschlüsseln des zugeordneten Chiffriertextes (Y), wobei der Klartext (X) laufend von einer Nachrichtenquelle (11) und der Chiffriertext (Y) von einer Übertragungsleitung (13) abgegeben und blockweise durch eine jeweilige Eingangseinheit (21) den Eingängen (25-28) einer Verschlüsselungseinheit (60v) bzw. einer mit dieser identischen Entschlüsselungseinheit als Klartextteilblöcke (X₁-X₄) bzw. Chiffriertextteilblöcke (Y₁-Y₄) einer zweiten Länge (m) zugeführt wird,
wobei zum Verschlüsseln und zum Entschlüsseln ein gemeinsamer, geheimer Schlüsselblock (Z) dient, und wobei die entstehenden Chiffriertextteilblöcke (Y₁-Y₄) bzw. die Klartextteilblöcke (X₁-X₄) der gleichen zweiten Länge (m) an eine jeweilige Ausgangseinheit (79) abgegeben und von dieser als Chiffriertext (Y) bzw. Klartext (X) laufend ausgegeben wird,
dadurch gekennzeichnet,
- dass aus dem Schlüsselblock (Z) als Steuerblöcke eine zweite Mehrzahl (T) Schlüsselteilblöcke (Z₁-Z_{T}) bzw. Entschlüsselungsteilblöcke (U₁-U_{T}) der zweiten Länge (m) gebildet und den Eingängen (29, 30, 32, 33, 49, 52, 129, 130, 132, 133) der Verschlüsselungseinheit (60) bzw. der Entschlüsselungseinheit zugeführt werden, die eine erste Mehrzahl (S) von gleichen, aufeinanderfolgenden Stufen (60.1v, 60.2v) aufweisen,
derart dass für jede Stufe i der Entschlüsselungseinheit
· ein erster und vierter Entschlüsselungsteilblock jeder Stufe i (i = 1, 2 ..... (S+1)) gleich sind dem Modulo(2^{m}+1)-Multiplikation-Inversen eines jeweils ersten bzw. vierten Schlüsselteilblockes in der (S-i+2)-ten Stufe der Verschlüsselungseinheit (60v),
· ein zweiter und dritter Entschlüsselungsteilblock in der i-ten Stufe (i = 2, 3 .... S) gleich sind dem Negativwert der Modulo-2^{m}-Addition eines dritten bzw. zweiten Schlüsselteilblockes in der (S-i+2)-ten Stufe der Verschlüsselungseinheit (60v),
· ein zweiter und dritter Entschlüsselungsteilblock in der ersten und (S+1)-ten Stufe gleich sind dem Negativwert der Modulo -2^{m}-Addition eines zweiten und dritten Schlüsselteilblockes in der (S+1)-ten bzw. der ersten Stufe der Verschlüsselungseinheit (60v), und
· ein fünfter und sechster Entschlüsselungsteilblock in der i-ten Stufe (i = 1, 2 ... S) gleich sind dem fünften bzw. sechsten Schlüsselteilblock in der (S-i+1)-ten Stufe der Verschlüsselungseinheit (60v).

16. Verwendung nach Anspruch 14 oder 15,
dadurch gekennzeichnet,
dass die Schlüsselteilblöcke (Z₁-Z_{T}) dadurch gewonnen werden,
· dass in einem ersten Schritt der Schlüsselblock (Z) in acht erste Schlüsselteilblöcke (Z₁-Z₈) der zweiten Länge (m) unterteilt wird,
· dass in einem zweiten Schritt die Bits des Schlüsselblockes (Z) zyklisch um eine vorgegebene Bitzahl verschoben werden und der hierbei gebildete neue Block in acht weitere Schlüsselteilblöcke (Z₉-Z₁₆) unterteilt wird, und
· dass der zweite Schritt solange wiederholt wird, bis alle Schlüsselteilblöcke (Z₁-Z_{T}) gebildet sind.

17. Verwendung nach Anspruch 19 oder 15,
dadurch gekennzeichnet,
dass die zweite Mehrzahl (T) zweiundfünfzig ist,
dass die erste Mehrzahl (S) acht ist, und
dass die zweite Länge (m) sechzehn ist.

## Claims

1. A device for the conversion of in each case a given first binary digital block of a first length (N) into an associated second binary digital block of equal length (N) with the use of at least one freely selectable binary control block, characterised
- by at least one first input (25-26; 50, 51; 125-128) for inputting at least two first sub-blocks (X1-X4; e1, e2; e5-e8) of a second length (m) which together form the first digital block (X; Wn ),
- by at least one second input (29, 30, 32, 33, 49, 52, 129, 130, 133) for inputting at least two control blocks (Z1-Z52) of the second length (m),
- by a logic means (40, 60, 61.1, 61.2, 140) which in each case and serially perform at least four logical operations of at least two different kinds 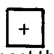 , 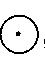 , 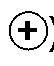 ),
· wherein at least the predominants number of all pairs of immediately successive operations consist of two operations of different kinds ( 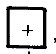 , 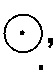 , 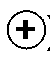 ),
· wherein by each operation in each case two input blocks (E1, E2) of the second length (m) are converted into an output block (A) of this length (m),
· wherein first sub-blocks (X1-X4; e1, e2; e5-e8), control blocks (Z1-Z52) and/or output blocks (A) of a respectively preceding operation serve as input blocks (E1, E2), and
- by at least one output (75-78; 47, 48; 35-38) for outputting at least two second sub-blocks (Wn1-Wn4, Y1-Y4; a1, a2; a5-a8) of the second length (m) associated with the first sub-blocks (X1-X4; e1, e2; e5-e8) and which together form the second digital block (Wn, Y).

2. A device according to Claim 1,
characterised
- in that at least one first input (50, 51) is provided for inputting two first sub-blocks (e1, e2),
- in that at least one second input (49, 52) is provided for inputting two control blocks (Z5, Z6 ),
- in that the logic means is a primary encryption logic (40) which in each case performs four logical operations of two different kinds ( 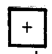 , 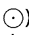 ),
· wherein one after another,
- by the first operation the one first sub-block (e1) is operated with the one control block (Z5) in the one kind ( 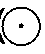 ),
- by the second operation the other first sub-block (e2) is operated with the output block of the first operation in the other kind ( 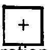 ),
- by the third operation the output block of the second operation is operated with the other control block (Z6) in the one kind ( 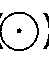 ) and
- by the fourth operation the output block of the first operation is operated with the output block of the third operation in the other kind ( 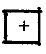 ), and
- in that at least one output (47, 48) is provided for outputting two second sub-blocks (a1, a2),
· wherein the one second sub-block (a1) being the output block of the fourth operation and the other second sub-block (a2) being the output block of the third operation.

3. A device according to Claim 1,
characterised
- in that at least one first input (125-128) is provided for inputting four first sub-blocks (e5-e8),
- in that the logic means is an expanded encryption logic means (140) comprising a central logic means and performs six logical operations of the third kind ( 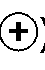 ),
· wherein
- the first and the second operation of the third kind ( 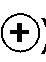 ) operate the first (e5) with the third (e7) and the second (e6) with the fourth first sub-block (e8), respectively,
- the output blocks of the first and the second operation are operated by the central logic means,
- a first output block of the central logic means is operated with the first (e5) and with the third first sub-block (e7) by the third and the fourth operations of the third kind ( 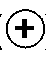 ), and
- a second output block of the central logic means is operated with the second (e6) and with the fourth first sub-block (e8) by the fifth and the sixth operation of the third kind ( 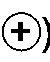 ), and
- in that at least one output (35-38) is provided for outputting four sub-blocks (a5 - a8),
· wherein the first (a5), the second (a6), the third (a7) and the fourth second sub-block (a8) are associated respectively with the output block of the third, the fifth, the fourth and the sixth operation.

4. A device according to Claim 2 and 3,
characterised
- in that at least one second input (49, 52) is provided for inputting two control blocks (Z5, Z6), and
- in that the primary encryption logic means (40) serves as a central logic means.

5. A device according to Claim 1 and 4,
characterised
- in that at least one first input (25, 26) is provided for inputting four first sub-blocks (X1-X4; Wn1-Wn4 )
- in that at least one second input (29, 30, 32, 33, 49, 52) is provided for inputting six control blocks (Z1-Z6)
- in that the logic means is an encryption stage (61.1, 61.2) which in each case performs fourteen logical operations of three different kinds ( 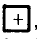 , 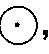 , 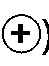 ),
· wherein by the first four operations in parallel the first first sub-block (X1, Wn1) and the second first sub-block (X2, Wn2) associated are operated with the first (Z1) and the second control block (Z2) in the second kind ( 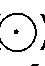 ) and the third first (X3, Wn3) and the fourth first sub-block (X4, Wn4) associated are operated with the third (Z3) and the fourth control block (Z4) in the first kind ( 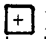 ),
· wherein the further ten operations being those of the expanded encryption logic means (140) and
· wherein the output blocks of the first four operations are the input blocks of the expanded encryption logic means (140), and
- in that at least one output (35-38) is provided for outputting four second sub-blocks (W11-W14; W(n+1)1-W(n+1)4), which, interchanged cross-wise, correspond to the output blocks of the expanded encryption logic means (140).

6. A device according to Claim 1 and 4,
characterised
- in that at least one first input (25-28) is provided for inputting four first sub-blocks (X1-X4; Wn1-Wn4),
- in that at least one second input (29, 30, 32, 33, 49, 52) is provided for inputting six control blocks (Z1-Z6),
- in that the logic means is an encryption stage (61.1, 61.2) which performs in each case fourteen logical operations of three different kinds ( 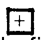 , 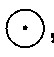 , 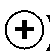 ),
· wherein by the first four operations in parallel the first first (X1, Wn1) and the third first sub-block (X3, Wn3) associated are operated with the first (Z1) and the third control block (Z3) in the second kind ( 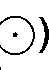 ) and the second first (X2, Wn2) and the fourth first sub-block (X4, Wn4) associated are operated with the second (Z2) and the fourth control block (Z4) in the first kind ( 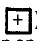 ),
· wherein the further ten operations being those of the expanded encryption logic means (140), and
· wherein the output blocks of the first four operations being the input blocks of the expanded encryption logic means (140), and
· in that at least one output (35-38) is provided for outputting of four second sub-blocks (W11-W14; W(n+1)1-W(n+1)4),
· wherein the first (35) and the fourth output (38) corresponding directly and the second (36) and the third output (37) corresponding after cross-wise interchange to the output blocks of the expanded encryption logic means (140).

7. A device according to Claim 1 and 5,
characterised
- in that at least one first input (25-28) is provided for inputting of four first sub-blocks (X1-X4),
- in that at least one second input (29, 30, 32, 33, 49, 52, 129, 130, 132, 133) is provided for inputting a second plurality (T) of control blocks (Z1 -Z52),
- in that the logic means is an encryption unit (60) comprising a first plurality (S) of identical encryption stages (61.1, 61.2) which follow one another in such a way, that the outputs of the relevant preceding stage form the inputs of whichever is the following stage,
- in that the encryption unit (60) comprises a divergent final encryption stage (69) which performs in parallel four operations of two different kinds ( 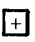 , 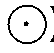 ),
- in that at least one output (75-78) is provided for outputting four second sub-blocks (Y1-Y4) which correspond to the output blocks of the divergent final encryption stage (69),
· wherein the second plurality (T) is equal to six times the first plurality (S) plus four,
· wherein the first (Wn1) and the second output block (Wn2) associated are operated with the (T-3)rd and the (T-2)nd control block (Z49, Z50) in the second kind ( 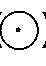 ) and the third (Wn3) and the fourth output block (Wn4) of the preceding stage associated are operated with the (T-1)st and Tth control block (Z51, Z52) in the first kind ( 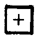 ).

8. A device according to Claim 1 and 6,
characterised
- in that at least one first input (25-28) is provided for inputting four first sub-blocks (X1-X4),
- in that at least one second input (29, 30, 32, 33, 49, 52, 129, 130, 132, 133) is provided for inputting a second plurality (T) of control blocks (Z1-Z52),
- in that the logic means is an encryption unit (60v) comprising a first plurality (S) of identical encryption stages (61.1v, 61.2v) which follow one another in such a way that the outputs of the relevant preceding stage form the inputs of whichever is the following stage,
- in that the encryption unit (60v) comprises a different final encryption stage (69v) which performs in parallel four operations of two different kinds ( 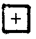 , 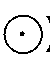 ),
- in that at least one output (75-78) is provided for outputting four second sub-blocks (Y1-Y4) which correspond to the output blocks of the divergent final encryption stage (69),
· wherein the second plurality (T) is equal to six times the first plurality (S) plus four,
· wherein the first (Wn1) and the second output block (Wn2) of the preceding final one of the identical encryption stages (61.1v, 61.2v) associated are operated with the (T-3)rd and the (T-2)nd control block (Z49, Z50) in the second kind ( 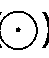 ) and the third (Wn3) and the fourth output block (Wn4) of the preceding stage associated are operated with the (T-1)st and the Tth control block (Z51, Z52) in the first kind ( 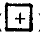 ),
· wherein the second and the third input of the divergent final encryption stage (69v) are interchanged with each other.

9. A device according to Claim 7 or 8,
characterised in that
the second plurality (T) is equal to fifty-two and the first plurality (S) is equal to eight.

10. A device according to Claim 1,
characterised
- in that the operation of a first kind ( 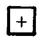 , addition modulo 2^{m}) is so disposed,
· that each input block (E1, E2) of the operation is considered as an integer in binary representation and as an element of the quantity {(0, 1, 2, 3..., (2^{m}-1)}, and
· that the associated output block (A) is the binary representation of the sum modulo 2^{m} of the input blocks (E1, E2),
- in that the operation of a second kind ( 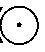 , multiplication modulo (2^{m}+1)) is so disposed,
· that, in so far as all bits of a block (E2, E2, A) are zero, this block is regarded as the integer 2^{m} in binary representation and in that otherwise each input block (E1, E2) is considered as an integer in binary representation and as an element of the quantity {(1, 2, 3,... (2^{m}-1)},
· that the associated output block (A) is the binary representation of the product modulo (2^{m}+1) of the input blocks (E1, E2), and
- in that the operation of a third kind ( 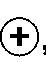 , bit-for-bit -exclusive-OR) is so disposed,
· that each block (E1, E2, A) of the operation is considered as a sequence of bits, by which a fixed position is associated with each bit, and
· that in the sequence given by this, each bit of the output block (A) is the exclusive-OR of the two bits of the relevant position of the two input blocks (E1, E2).

11. A device according to Claim 10,
characterised in that
the second length (m) is either four, eight or sixteen.

12. A device according to Claim 1,
characterised in that
in order to carry out each individual logical operation an individually associated operation unit (41-44, 111-120) is provided which has two inputs for inputting the relevant input blocks (E₁, E₂) and an output for outputting of the relevantly associated output block (A).

13. A device according to Claim 1,
characterised
in order to carry out the logical operations, operation units are provided which comprise at least one common processor which links the inputted input blocks to one another in accordance with a predetermined programme.

14. The use of two devices according to Claim 7 for the encryption of a digital plain text (X) and for decryption the associated cipher text (Y),
wherein the plain text (X) is delivered continuously by a message source (11) and the cipher text (Y) is delivered by a transmission line (13) and fed block-wise by a respective input unit (21) to the inputs (25-28) of an encryption unit (60) or to a decryption unit identical thereto,
respectively, plain text sub-blocks (X1-X4) or cipher text sub-blocks (Y1-Y4) of a second length (m), respectively, wherein for the encryption and decryption a common secret key block (Z) is used, the resulting cipher text sub-blocks (Y1-Y4) or the plain text sub-blocks (X1-X4), respectively, of the same second length (m) being delivered to a respective output unit (79) and being delivered continously by this unit as a cipher text (Y) or as a plain text (X), respectively,
characterised
- in that from the key block (Z) as control blocks a second plurality (T) of encryption sub-blocks (Z1-ZT) or decryption sub-blocks (U1-UT), respectively, of the second length (m) are formed and are fed to the inputs (23, 30, 32, 33, 49, 52, 129, 130, 132, 133) of the encryption unit (60) or the decryption unit, respectively, which comprise a first plurality (S) of identical successive stages (60.1, 60.2), in such a way,
that for each stage i of the decryption unit
· a first and second decryption sub-block of each stage i (i = 1, 2 .... (S+1)), are identical to the modulo (2^{m}+1)-multiplication inverses of a respectively first and a second encryption sub-block in the (S-i+2)nd stage of the encryption unit (60),
· a third and fourth decryption sub-block in the i-th stage (i = 1, 2 .... (S+1)) are identical to the negative value of the modulo-2^{m} addition of a third and a fourth encryption sub-block in the (S-i+2)nd stage of the encryption unit (60) and
· a fifth and sixth decryption sub-block in the i-th stage (i = 1, 2 ... S) are identical to the fifth and the sixth encryption sub-block in the (S-i+1)st stage of the encryption unit (60).

15. The use of two devices according to Claim 8 for the encryption of a digital plain text (X) and for decryption of the associated cipher text (Y),
wherein the plain text (X) is delivered continuously by a message source (11) and the cipher text (Y) is delivered by a transmission line (13) and fed block-wise by a respective input unit (21) to the inputs (25-28) of an encryption unit (60v) or to a decryption unit identical thereto,
respectively, as plain text sub-blocks (X1-X4) or the cipher text sub-blocks (Y1-Y4) of a second length (m),
wherein for the encryption and decryption a common secret key block (Z) is used, the resulting cipher text sub-blocks (Y1-Y4) or the plain text sub-blocks (X1-X4) of the same second length (m) being delivered to a respective output unit (79) and being delivered continously by this unit as a cipher text (Y) or plain text (X), respectively,
characterised
- in that from the key block (Z) as control blocks a second plurality (T) of encryption sub-blocks (Z1-ZT) or decryption sub-blocks (U1-UT), respectively, of the second length (m) are formed and are fed to the inputs (29, 30, 32, 33, 49, 52, 129, 130, 132, 133) of the encryption unit (60) or the decryption unit, respectively, which comprise a first plurality (S) of identical successive stages (60.1v, 60.2v), in such a way,
that for each stage i of the decryption unit
· a first and fourth decryption sub-block of each stage i (i = 1 2 .... (S+1)) are identical to the modulo (2^{m}+1)-multiplication inverses of a respectively first and a fourth encryption sub-block in the (S-i+2)nd stage of the encryption unit (60v),
· a second and third decryption sub-block in the i-th stage (i = 2 3 .... S) are identical to the negative value of the modulo-2^{m} addition of a third or second encryption sub-block in the (S-i+2)nd stage of the encryption unit (60v),
· a second and third decryption sub-block in the first and the (S+1)st stage are identical to the negative value of the modulo-2^{m} addition of a second and third encryption sub-block in the (S+1)st and the first stage of the encryption unit (60v), and
· a fifth and sixth decryption sub-block in the i-th stage (i = 1 2 ... S) are identical to the fifth and sixth encryption sub-block in the (S-i+1)st stage of the encryption unit (60v).

16. The use according to Claim 14 or 15,
characterised in that the key sub-blocks (Z1-ZT) are obtained
· in that in a first step the key block (Z) is subdivided into eight first encryption sub-blocks (Z1-Z8) of the second length (m)
· in that in a second step the bits of the key block (Z) are cyclically offset by a predetermined bit number and the resulting new block is subdivided into eight further encryption sub-blocks (Z9-Z16), and
· in that the second step is repeated until such time as all the encryption sub-blocks (Z1-ZT) are formed.

17. The use according to Claim 14 or 15,
characterised
in that the second plurality (T) is fifty-two,
in that the first plurality (S) is eight, and
in that the second length (m) is sixteen.

## Revendications

1. Dispositif pour convertir chaque fois un premier bloc numérique, binaire quelconque d'une première longueur (N) en un second bloc numérique binaire associé, de même longueur (N) en utilisant au moins un bloc de commande, binaire, choisi librement,
caractérisé par
- au moins une première entrée (25-26 ; 50- 51 ; 125-128) pour introduire au moins deux premières parties de bloc (X₁-X₄ ; e₁, e₂ ; e₅-e₈) d'une seconde longueur (m) formant en combinaison le premier bloc numérique (X ; Wₙ)
- au moins une seconde entrée (29, 30, 32, 33, 49, 52, 129, 130, 133) pour introduire au moins deux blocs de commande (Z₁ -Z₅₂) de la seconde longueur (m),
- une logique (40, 60, 61.1, 61.2, 140) exécutant au moins quatre opérations logiques correspondant à au moins deux types différents ( 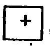 , 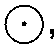 , 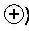 ),
· au moins le nombre principal de toutes les paires d'opérations se suivant directement se composant de deux opérations de types différentes ( 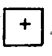 , 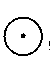 , 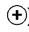 ),
· chaque opération convertissant deux blocs d'entrée (E₁, E₂) correspondant à la seconde longueur (m) en un bloc de sortie (A) correspondant à cette longueur (m),
· les blocs d'entrée (E₁, E₂) étant constitués par la première partie de bloc (X₁ -X₄ ; e₁, e₂ ; e₅-e₈) des blocs de commande (Z₁ -Z₅₂) et/ou des blocs de sortie (A) de chaque fois l'opération précédente et
- au moins une sortie (75-78 ; 47, 48 ; 35-38) pour émettre au moins deux des premières parties de bloc (X₁-X₄ ; e₁, e₂, e₅-e₈), des secondes parties de bloc (Wₙ₁-Wₙ₄, Y₁-Y₄ ; a₁, a₂ ; a₅-a₈) correspondant à la seconde longueur (m) et qui forment en réunion le second bloc numérique (Wₙ, Y).

2. Dispositif selon la revendication 1, caractérisé par :
- au moins une première entrée (50, 51) pour introduire deux premières parties de blocs (e₁, e₂),
- au moins une seconde entrée (49, 52) pour introduire deux blocs de commande (Z₅, Z₆),
- la logique est une logique de cryptage primaire (40) exécutant chaque fois quatre opérations logiques de deux types différents 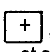 , 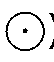 ),
· et successivement, par la première opération, la première partie de bloc (e₁) est combinée avec un bloc de commande (Z₅) d'un type ( 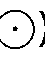 ),
- par la seconde opération de l'autre première partie de bloc (e₂) on traite avec le bloc de sortie de la première opération selon un autre type ( 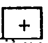 ),
- par une troisième opération on traite le bloc de sortie de la seconde opération avec l'autre bloc de commande (Z₆) selon de l'un type ( 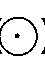 ) et
- par une quatrième opération numéro (i) du bloc de sortie de la première opération et du bloc de sortie de la troisième opération, on traite suivant de l'autre type ( 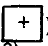 ) et
- on a au moins une sortie (47, 48) pour émettre deux secondes parties de bloc (a₁, a₂),
· l'une des secondes parties de bloc (a₁) étant le bloc de sortie de la quatrième opération et l'autre seconde partie de bloc (a₂) étant le bloc de sortie de la troisième opération.

3. Dispositif selon la revendication 1, caractérisé par :
- au moins une première entrée (125-128) pour introduire quatre premières parties de bloc (e₅-e₈),
- la logique est une logique de cryptage étendue (140) comprenant une logique centrale et six opérations logiques du troisième type ( 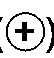 ),
· avec :
- la première et la seconde opération du troisième type ( 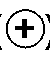 ) traitant la première partie de bloc (e₅) avec la troisième partie de bloc (e₇) et la seconde partie (e₆) avec la quatrième première partie de bloc (e₈),
- la logique centrale traite les blocs de sortie de la première et de la seconde opération,
- la troisième et quatrième opération du troisième type ( 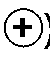 ) traitant un premier bloc de sortie de la logique centrale avec la première (e₅) ou troisième (e₇) partie de bloc et
- la cinquième et la sixième opération du troisième type ( 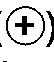 ) traitant un second bloc de sortie de la logique centrale avec une seconde (e₆) et quatrième (e₈) première partie de bloc et
- au moins une sortie (35-38) est prévue pour fournir quatre parties de blocs (a₅-a₈),
· la première (a₅), la seconde (a₆), la troisième (a₇) et la quatrième (a₈) de la seconde partie de bloc étant associées au bloc de sortie de la troisième, de la cinquième, de la quatrième ou de la sixième opération.

4. Dispositif selon les revendications 2 et 3, caractérisé par :
- au moins une seconde entrée (49, 52) pour introduire deux blocs de commande (Z₅, Z₆) et
- la logique centrale est la logique de cryptage primaire (40).

5. Dispositif selon les revendications 1 et 4, caractérisé par :
- au moins une première entrée (25-28) pour introduire quatre premières parties de blocs (X₁-X₄ ; Wₙ₁-Wₙ₄),
- au moins une seconde entrée (29, 30, 32, 33, 49, 52) pour introduire six blocs de commande (Z₁-Z₆),
- la logique est une logique de cryptage (61.1, 61.2) effectuant chaque fois quatorze opérations logiques de trois types différents ( 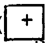 , 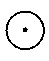 , 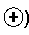 ),
· les premières quatre opérations traitent en parallèle la première première (X₁, Wₙ₁) et la seconde (X₂, Wₙ₂) première partie de bloc avec le premier (Z₁) et le second (Z₂) bloc de commande selon le second type ( 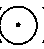 ) et la troisième première (X₃, Wₙ₃) et quatrième première (X₄, Wₙ₄) partie de bloc associée au troisième bloc de commande (Z₃) et quatrième bloc de commande (Z₄) selon le premier type ( 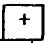 ),
· les dix autres opérations étant celles de la logique de cryptage étendue (140), et
· les blocs de sortie des premières quatre opérations étant les blocs d'entrée de la logique de cryptage étendue (140) et
- au moins une sortie (35-38) pour émettre quatre secondes parties de bloc (W₁₁-W₁₄ ; W₍ₙ₊₁₎₁-W₍ₙ₊₁₎₄), l'échange croisé des blocs de sortie correspondant à la logique de cryptage étendue (140).

6. Dispositif selon les revendications 1 et 4, caractérisé par :
- au moins une première entrée (25-28) pour introduire quatre premières parties de blocs (X₁-X₄ ; Wₙ₁-Wₙ₄),
- au moins une seconde entrée (29, 30, 32, 33, 49, 52) pour introduire six blocs de commande (Z₁-Z₆),
- la logique est une logique de cryptage (61.1, 61.2) effectuant chaque fois quatorze opérations logiques de trois sortes différentes ( 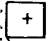 , 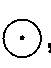 , 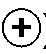 ),
· les premières quatre opérations traitent en parallèle la première première (X₁, Wₙ₁) et la troisième première partie de bloc (X₃, Wₙ₃) avec le premier bloc de commande (Z₁) et le troisième bloc de commande (Z₃) selon le second type ( 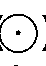 ) et la seconde première partie de bloc (X₂, Wₙ₂) et la quatrième première partie de bloc (X₄, Wₙ₄) associée au second bloc de commande (Z₂) et quatrième bloc de commande (Z₄) selon le premier type ( 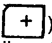 ),
· les autres dix opérations étant celles de la logique de cryptage étendue (140) et
· les blocs de sortie des quatre premières opérations étant les blocs d'entrée de la logique de cryptage étendue (140) et
- au moins une sortie (35-38) étant prévue pour fournir quatre secondes parties de blocs (W₁₁-W₁₄ ; W₍ₙ₊₁₎₁-W₍ₙ₊₁₎₄, la première sortie (35) et la quatrième sortie (38) étant reliées directement, la seconde sortie (36) et la troisième sortie (37) étant reliées de manière croisée aux blocs de sortie de la logique de cryptage étendue (140).

7. Dispositif selon les revendications 1 et 5, caractérisé par :
- au moins une première entrée (25-28) pour introduire quatre premières parties de blocs (X₁-X₄),
- au moins une seconde entrée (29, 30, 32, 33, 49, 52, 129, 130, 132, 133) pour introduire un second ensemble (T) de blocs de commande (Z₁-Z₅₂),
- la logique est une unité de cryptage (60) comprenant un premier ensemble (S) d'étages de cryptage identiques (61.1, 61.2) qui se suivent pour que les sorties des étages chaque fois précédents constituent les entrées des étages respectivement suivants,
- l'unité de cryptage (60) comprend un dernier étage de cryptage différent (69) qui exécute en parallèle quatre opérations de deux types différents ( 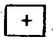 , 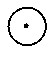 ) et
- au moins une sortie (75-78) pour émettre quatre secondes parties de blocs (Y₁-Y₄) qui correspondent au bloc de sortie du dernier étage de cryptage (69), différent,
· le second ensemble (T) étant égal au sextuple du premier ensemble (S) augmenté de quatre,
· le premier bloc de sortie (Wₙ₁) et le second bloc de sortie (Wₙ₂) des derniers étages de cryptage identiques, précédents, (61.1, 61.2) étant traités avec le bloc de commande numéro (T-3) et le bloc de commande numéro (T- 2) (Z₄₉, Z₅₀) du second type ( 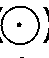 ) et le troisième bloc de sortie (Wₙ₃) et le quatrième bloc de sortie (Wₙ₄) de l'étage précédent étant traités par le bloc de commande numéro (T-1) et le bloc de commande numéro (T) (Z₅₁, Z₅₂) selon le premier type ( 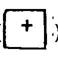 ).

8. Dispositif selon les revendications 1 et 6, caractérisé par :
- au moins une première entrée (25-28) pour introduire quatre premières parties de blocs (X₁-X₄),
- au moins une seconde entrée (29, 30, 32, 33, 49, 52, 129, 130, 132, 133) pour introduire un second ensemble (T) de blocs de commande (Z₁-Z₅₂),
- la logique est une unité de cryptage (60v) qui comprend un premier ensemble (S) d'étages de cryptage identiques (61.1v, 61.2v) qui se suivent de façon que les sorties de l'étage précédent constituent les entrées de l'étage suivant directement,
- l'unité de cryptage (60v) comprend un dernier étage de cryptage (69v), différent, qui exécute en parallèle quatre opérations de deux types différents ( 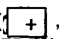 , 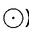 ),
- au moins une sortie (75-78) étant prévue pour émettre quatre secondes parties de blocs (Y₁-Y₄) qui correspondent aux blocs de sortie du dernier étage de cryptage (69v), différent,
· le second ensemble (T) étant égal au sextuple du premier ensemble (S) augmenté de quatre,
· le premier bloc de sortie (Wₙ₁) et le second bloc de sortie (Wₙ₂) des derniers états de cryptage identiques précédents (61.1v, 61.2v) étant traités avec respectivement le bloc de commande numéro (T-3) et celui numéro (T-2) (Z₄₉, Z₅₀) du second type ( 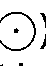 ) et le troisième bloc de sortie (Wₙ₃) et le quatrième bloc de sortie (Wₙ₄) de l'étage précédent étant traités avec le bloc de commande numéro (T-1) et celui numéro (T) (Z₅₁, Z₅₂) du premier type ( 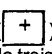 ) et
· la seconde et la troisième entrée du dernier étage de cryptage, différent (69v), étant échangées.

9. Dispositif selon les revendications 7 ou 8, caractérisé en ce que le second ensemble (T) étant égal à cinquante deux et le premier ensemble (S) est égal à huit.

10. Dispositif selon la revendication 1, caractérisé en ce que :
- l'opération du premier type ( 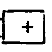 , addition modulo 2^{m}) est telle que
· chaque bloc d'entrée (E₁, E₂) de l'opération est considéré comme un nombre global en représentation binaire et comme élément de l'ensemble {0, 1, 2, 3..., (2^{m}-1)} et
· le bloc de sortie (A) associé est la représentation binaire de la somme modulo 2^{m} des blocs d'entrée (E₁, E₂),
- l'opération du second type ( 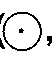 , multiplication modulo (2^{m}+1)) est telle que
· dans la mesure où tous les bits d'un bloc (E₁, E₂, A) sont nuls, ce bloc est considéré comme le nombre entier 2^{m} en représentation binaire
· au cas contraire, chaque bloc d'entrée (E₁, E₂) est considéré comme un nombre entier en représentation binaire et comme élément de l'ensemble {1, 2, 3, ... (2^{m}-1)} et
· le bloc de sortie (A) respectif est en représentation binaire le produit modulo (2^{m}+1) des blocs d'entrée (E₁, E₂) et
- l'opération du troisième type ( 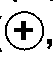 , combinaison logique OU-exclusif bit pour bit est telle que
· chaque bloc (E₁, E₂, A) de l'opération est considéré comme une suite de bits associant à chaque bit une position fixe,
· et dans la série donnée par cette succession, chaque bit du bloc de sortie (A) est la combinaison OU-exclusif des deux bits de la position respective des deux blocs d'entrée (E₁, E₂).

11. Dispositif selon la revendication 10, caractérisé en ce que la seconde longueur (m) est égale soit à quatre soit à huit soit à seize.

12. Dispositif selon la revendication 1, caractérisé en ce que pour exécuter chacune des opérations logiques, il est prévu une unité opérationnelle associée individuellement (41-44, 111-120) qui possède deux entrées pour introduire chacun des blocs d'entrée (E₁, E₂) et une sortie pour fournir le bloc de sortie associé (A).

13. Dispositif selon la revendication 1, caractérisé en ce que pour exécuter les opérations logiques, on a des unités opérationnelles comprenant au moins un processeur commun qui combine les blocs d'entrée appliqués à ces entrées en fonction d'un programme prédéterminé.

14. Application de deux dispositifs selon la revendication 7 pour crypter un texte numérique clair (X) et pour décrypter le texte crypté associé (Y), le texte clair (X) étant fourni en continu par une source d'informations (11) et le texte crypté (Y) étant fourni par une ligne de transmission (13) pour être appliqué par blocs à travers une unité d'entrée respective (21) aux entrées (25-28) d'une unité de cryptage (60) ou comme une partie de bloc de texte clair (X₁-X₄) ou partie de bloc de texte crypté (Y₁-Y₄) d'une seconde longueur (m) pour cette même unité de décryptage,
et pour crypter et pour décrypter, on utilise un bloc de clef de cryptage (Z), secret, commun,
les parties de bloc de texte crypté (Y₁-Y₄) obtenues ou les parties de bloc de texte clair (X₁, X₄) correspondant à la même seconde longueur (m) sont fournies à une unité de sortie (79) respective et sont émises en continu par celle-ci comme texte crypté (Y) ou texte clair (X),
caractérisée en ce que
- avec le bloc de clef (Z) on forme comme bloc de commande, un second ensemble (T) de parties de bloc de clef (Z₁-Z_{T}) ou de parties de bloc de clef de décryptage (U₁-U_{T}) de la seconde longueur (m) et les entrées (29, 30, 32, 33, 49, 52, 129, 130, 132, 133) sont fournies à l'unité de cryptage (60) ou à l'unité de décryptage présentant un premier ensemble (S) d'étages identiques successifs (60.1, 60.2),
de façon que pour chaque étage i de l'unité de décryptage,
· une première et une seconde partie de bloc de clef de décryptage de chaque étage i (i = 1, 2...(S+1)) sont égales aux produits inverses modulo (2^{m}+1) respectivement d'une première et d'une seconde partie de bloc de clef de cryptage dans l'étage numéro (S-i+2) de l'unité de cryptage (60),
· une troisième et une quatrième partie de bloc de clef de décryptage de l'étage numéro i (i = 1, 2... S+1)) sont égales aux valeurs négatives de la somme modulo 2^{m} d'une troisième et d'une quatrième partie de bloc de clef dans l'étage numéro (S-i+2) de l'unité de cryptage (60) et
· une cinquième et une sixième partie de bloc de clef de décryptage dans l'étage numéro i (i = 1, 2...S) sont égales à la cinquième et à la sixième partie de bloc de émet à la clef dans l'étage numéro (S-i+1) de l'unité de cryptage (60).

15. Application de deux dispositifs selon la revendication 8 pour crypter un texte numérique clair (X) et pour décrypter le texte crypté (Y) associé, le texte clair (X) étant fourni en continu par une source d'informations (11) et le texte crypté (Y) étant fourni par une ligne de transmission (13) pour être passé par blocs, par chaque fois une unité d'entrée (21) aux entrées (25-28) d'une unité de cryptage (60v) ou d'une unité de décryptage identique à celle-ci , sous la forme de parties de bloc de texte clair (X₁-X₄) ou de parties de bloc de texte crypté (Y₁-Y₄) d'une seconde longueur (m),
un bloc de clef (Z), secret, commun, servant au cryptage et au décryptage et les parties de bloc de texte crypté (Y₁-Y₄), obtenues ou les parties de bloc de texte clair (X₁-X₄) correspondant à la même seconde longueur (m) étant fournies en continu à une unité de sortie (79) respective pour être émises par celle-ci sous la forme d'un texte crypté (Y) ou d'un texte clair (X),
application caractérisée en ce que :
- à partir du bloc de clef (Z) on forme comme bloc de commande, un second ensemble (T) de parties de bloc de clef de cryptage (Z₁-Z_{T}) ou de parties de bloc de clef de décryptage (U₁-U_{T}) correspondant à la seconde longueur (m) et on les fournit aux entrées (29, 30, 32, 33, 49, 52, 129, 130, 132, 133) de l'unité de cryptage (60) ou de l'unité de décryptage ayant un premier ensemble (S) d'étages identiques successifs (60.1v, 60.2v),
de façon que pour chaque étage i de l'unité de décryptage
· une première et une quatrième partie de bloc de clef de décryptage de chaque étage numéro i (i = 1, 2...(S+1)) soient égales aux produits inverses modulo (2^{m}+1) de chaque fois une première, quatrième, partie de bloc de clef dans l'étage numéro (S-i+2) de l'unité de cryptage (60v),
· une seconde et une troisième partie de bloc de clef de décryptage de l'étage numéro i (i = 2, 3...S) soient égales à la somme négative modulo 2^{m} d'une troisième et d'une seconde partie de bloc de clef dans l'étage numéro (S-i+2) de l'unité de cryptage (60v),
· une seconde et une troisième partie de bloc de clef de décryptage dans le premier étage et l'étage numéro (S+1) soient égales à la somme négative modulo 2^{m} d'une seconde et d'une troisième partie de bloc de clef dans l'étage numéro (S+1) et dans le premier étage de l'unité de cryptage (60v), et
· une cinquième et une sixième partie de blocs de décryptage dans l'étage numéro i (i = 1, 2...S) soient égales à la cinquième et à la sixième partie de bloc de clef dans l'étage numéro (S-i+1) de l'unité de cryptage (60v).

16. Application selon les revendications 14 ou 15, caractérisée en ce qu'on obtient les parties de bloc de clef de cryptage (Z₁-Z_{T}) en ce que
· dans une première étape, on subdivise le bloc de clef (Z) en huit premières parties de bloc de clef de cryptage (Z₁-Z₈) possédant la seconde longueur (m),
· dans une seconde étape, on décale les bits du bloc de clef (Z), de manière cyclique selon un nombre de bits prédéterminé et le nouveau bloc ainsi formé est subdivisé en huit autres parties de bloc de clef de cryptage (Z₉-Z₁₆) et
· on répète la seconde étape jusqu'à ce que soit formées toutes les parties de bloc de clef de cryptage (Z₁-Z_{T}).

17. Application selon les revendications 14 ou 15, caractérisée en ce que
le second ensemble (T) est égal à cinquante deux,
le premier ensemble (S) est égal à huit,
la seconde longueur (m) est égale à seize.
